(19) **Europäisches Patentamt / European Patent Office / Office européen des brevets**

(11) **EP 4 438 634 A1**

(12) # EUROPEAN PATENT APPLICATION
published in accordance with Art. 153(4) EPC

(43) Date of publication:
**02.10.2024 Bulletin 2024/40**

(21) Application number: **22895678.5**

(22) Date of filing: **17.11.2022**

(51) International Patent Classification (IPC):
$C08F\ 20/04\ ^{(2006.01)}$    $C08J\ 11/22\ ^{(2006.01)}$
$B29B\ 17/02\ ^{(2006.01)}$    $B32B\ 7/06\ ^{(2019.01)}$
$B32B\ 38/18\ ^{(2006.01)}$    $C08J\ 7/02\ ^{(2006.01)}$

(52) Cooperative Patent Classification (CPC):
**B29B 17/02; B32B 7/06; B32B 38/18; C08F 20/04;
C08J 7/02; C08J 11/22; Y02W 30/62**

(86) International application number:
**PCT/JP2022/042743**

(87) International publication number:
**WO 2023/090397 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2021 JP 2021189093
20.04.2022 JP 2022069564**

(71) Applicants:
• **artience Co., Ltd.**
**Tokyo 104-8377 (JP)**
• **Toyo Ink Co., Ltd.**
**Tokyo 104-8378 (JP)**
• **Toyo-Morton, Ltd.**
**Chuo-ku
Tokyo 1040031 (JP)**

• **Toyochem Co., Ltd.**
**Chuo-ku
Tokyo 1048379 (JP)**

(72) Inventors:
• **YAMAGAMI, Tomoe**
**Tokyo 104-8378 (JP)**
• **SHIKIJI, Wataru**
**Tokyo 104-8378 (JP)**
• **MAEDA, Daisuke**
**Tokyo 104-8378 (JP)**
• **KONDO, Soichiro**
**Tokyo 104-8378 (JP)**

(74) Representative: **Becker, Eberhard
Becker Kurig & Partner
Patentanwälte mbB
Bavariastraße 7
80336 München (DE)**

(54) **METHOD FOR SEPARATION AND RECOVERY OF LAMINATE**

(57) One embodiment relates to a method for the separation and recovery of a laminate that includes a step for immersing a laminate provided with at least a polyolefin base material layer and a release layer in contact with the polyolefin base material layer in a release solution containing a surfactant having an HLB value of 7 or more and a defoamer having an HLB value of 1-3, releasing the release layer, and recovering the polyolefin base material, the release layer being a layer including a water-soluble resin or a compound having an acidic group.

EP 4 438 634 A1

**Description**

[Technical Field]

An embodiment of the present invention relates to a method for separation and recovery of a laminate having at least a polyolefin base material layer and a release layer in contact with the polyolefin base material layer. Other embodiments of the present invention relate to a method for producing a molding material and a method for producing a molded article.

[Background Art]

In recent years, packages, plastic bottles, and other plastic products made from plastic films have been discarded or dumped into the ocean, which causes environment pollution problems. These plastic products are decomposed in seawater and become submicron-sized fragments (microplastics) that float in seawater. These microplastics are ingested by marine organisms such as fish, and concentrated inside the organisms, and thus there are concerns that they may affect the health of seabirds and humans who consume the marine organisms as food.

Examples of plastic products include food packaging packages having a multilayer structure using plastic films, and in such food packaging packages, as film base materials, various plastic base materials such as a polyester base material, a nylon base material (NY), a polypropylene base material (PP), and a polyethylene base material (PE) are used. These film base materials have printing ink printed thereon, and are bonded to other film base materials or hot-melt resin base materials via an adhesive or the like and then cut and heat-fused to form a package. However, such food packaging packages having a multilayer structure contain a mixture of a plurality of different materials that are incompatible with each other, and thus there is a problem that direct material recycling is not possible.

Regarding material recycling of such packaging materials having a multilayer structure, for example, Patent Literature 1 discloses a technique for releasing a printing layer not only from a surface-printed structure but also from a laminate having a multilayer structure by treating the laminate having a release layer containing a polyurethane resin having a predetermined acid value with an alkaline aqueous solution.

Patent Literature 2 discloses a technique for releasing an adhesive layer from a laminate having a multilayer structure by treating a laminate containing a polyester polyol-based adhesive having a predetermined acid value with an alkaline aqueous solution.

In addition, Patent Literature 3 discloses a technique for removing an ink from a film using a washing solution which has a basic pH and contains a cationic or anionic surfactant.

In addition, Patent Literature 4 describes a method in which, regarding wallpaper waste piece recycling, a laminate composed of a resin sheet or resin film and a paper layer is subjected to a treatment of disintegrating paper fibers in an aqueous medium containing a surfactant, and thus the resin sheet or resin film and the paper are separated.

In addition, Patent Literature 5 describes a method of obtaining a purified plastic by granulating a compressed used plastic into flakes, performing a wet treatment, and then separating contaminants based on the difference in specific gravity.

In addition, Patent Literature 6 describes a recycling system using a wet crushing instrument that can crush a laminate in water and separate the laminate at the same time as crushing.

[Citation List]

[Patent Literature]

[Patent Literature 1]
Japanese Patent Laid-Open No. 2020-090627
[Patent Literature 2]
Japanese Patent Laid-Open No. 2020-084130
[Patent Literature 3]
Published Japanese Translation No. 2015-520684 of the PCT International Publication
[Patent Literature 4]
Japanese Patent Laid-Open No. 2010-012636
[Patent Literature 5]
United States Patent No. 5143308
[Patent Literature 6]

PCT International Publication No. WO 2021/230033

[Summary of Invention]

[Technical Problem]

However, in the release step described in Patent Literature 1 and 2, when the amount of an alkaline aqueous solution with which the packaging material is treated is increased in order to improve productivity, there are problems of the releasability decreasing, and additionally, the released printing layer and adhesive layer being finely dispersed, and re-adhering to the polyolefin base material. Accordingly, molding materials obtained by recycling such base materials cause deterioration in appearance and physical properties due to coloring.

In addition, when the release solution contains the surfactant described in Patent Literature 3, bubbles are generated in the step of immersing in the release solution and releasing the release layer. Then, the generated bubbles enclose components (particularly highly lipophilic components) released from the release layer, form micelles, and float to the liquid level of the release solution. On the other hand, since a polyolefin base material with a small specific gravity also floats to the liquid level of the release solution, there are problems of the components released from the release layer and the polyolefin base material collecting densely at the liquid level of the release solution and further worsening re-adhesion to the polyolefin base material. Here, "re-adhesion" means that the release layer such as a printing layer or an adhesive layer released from the base material is finely dispersed by stirring and adheres to the base material again, causing coloration of the recovered polyolefin base material and deterioration of properties of the recycled material.

In addition, in order to prevent the generated bubbles from overflowing from the container, the treatment amount per container needs to be kept small, resulting in low treatment efficiency.

In addition, when the methods described in Patent Literature 4 to 6 are applied to plastic food packaging packages, the releasability of the printing layer and the adhesive layer is insufficient, and the above re-adhesion problem also occurs. Particularly, when paper fibers such as wallpaper waste pieces are disintegrated as in Patent Literature 4, release easily occurs because the release solution permeates the paper fibers, but in the case of plastic food packaging packages, the release solution is unlikely to permeate in many cases, and it is difficult to apply the method described in Patent Literature 4.

Therefore, an objective of the present invention is to provide a method for separation and recovery of a laminate which has excellent releasability of a printing layer and an adhesive layer, also has reduced re-adhesion of components released from the release layer, and is suitable for plastic recycling with high efficiency. In addition, an objective of the present invention is to provide a method for producing a molding material obtained by melt-kneading the recovered polyolefin base material and a method for producing a high-quality molded component obtained by heat-molding the molding material.

[Solution to Problem]

A method for separation and recovery of a laminate according to one aspect of the present invention includes a step for immersing a laminate having at least a polyolefin base material layer and a release layer in contact with the polyolefin base material layer in a release solution containing a surfactant having an HLB value of 7 or more and a defoamer having an HLB value of 1 to 3, releasing the release layer, and recovering the polyolefin base material, wherein the release layer is a layer containing a water-soluble resin or a compound having an acidic group.

A method for producing a molding material according to one aspect of the present invention includes melt-kneading the polyolefin base material recovered by the method for separation and recovery of a laminate.

A method for producing a molded article according to one aspect of the present invention includes heat-molding the molding material obtained by the above production method.

[Advantageous Effects of Invention]

According to the present invention, it is possible to provide a method for separation and recovery of a laminate which has excellent releasability of a printing layer and an adhesive layer, also has reduced re-adhesion of components released from the release layer, and is suitable for plastic recycling with high efficiency. In addition, it is possible to provide a method for producing a molding material obtained by melt-kneading the recovered polyolefin base material and a method for producing a high-quality molded component obtained by heat-molding the molding material.

[Description of Embodiments]

Hereinafter, embodiments of the present invention will be described in detail, but the embodiments and requirement descriptions mentioned below are examples of the embodiments of the present invention, and the present invention is not limited to these details as long as the gist thereof is not departed from.

A method for separation and recovery of a laminate according to an embodiment of the present invention includes a step for immersing a laminate having at least a polyolefin base material layer and a release layer in contact with the polyolefin base material layer in a release solution containing a surfactant having an HLB value of 7 or more and a defoamer having an HLB value of 1 to 3, releasing the release layer, and recovering the polyolefin base material, wherein the release layer is a layer containing a water-soluble resin or a compound having an acidic group.

When the release solution contains a surfactant having an HLB value of 7 or more, release of the release layer such as a printing layer or an adhesive layer is promoted, re-adhesion of finely dispersed released components (for example, highly lipophilic components derived from the release layer) to the released base material is additionally prevented, and the base material without coloring or stains can be recovered and recycled into high-quality recycled materials.

In addition, the defoamer can minimize bubbles generated due to the surfactant in the release step, but in contrast to the surfactant, the defoamer generally tends to reduce the releasability.

However, in this specification, when a surfactant having an HLB value of 7 or more and a defoamer having an HLB value of 1 to 3 are used in combination, even if the amount of the laminate relative to the release solution is increased, it is possible to achieve both excellent releasability and re-adhesion prevention. This is speculated to be due to the fact that, since the generation of bubbles is curbed, and the defoamer additionally has an affinity with components released from the release layer and is stabilized in the release solution, re-adhesion can be prevented without impairing releasability improvement with the surfactant. In addition, if the generation of bubbles is curbed, even when the amount of the laminate relative to the release solution is increased or when the amount of the release solution itself is large, it is easier to prevent bubbles from overflowing from the container, and as a result, it is possible to improve productivity.

<Separation and recovery method>

A method for separation and recovery of a laminate according to an embodiment of the present invention includes a step for immersing a laminate having at least a polyolefin base material layer and a release layer in contact with the polyolefin base material layer in a release solution containing a surfactant having an HLB value of 7 or more and a defoamer, releasing the release layer, and recovering the polyolefin base material layer.

In the embodiment of the present invention, "release" refers to, for example, the release layer dissolving or swelling and becoming detached due to a release solution, in which case the base material is released from the laminate, and includes both of the following cases: (1) the release layer dissolves and the base material is released, and (2) the release layer does not dissolve, but is detached due to neutralization, swelling or the like, and the base material is released. For example, the separation and recovery method may include releasing the base material from the laminate and recovering the base material.

In the embodiment of the present invention, "release" may refer to, for example, the release layer dissolving or swelling and becoming detached due to a release solution, in which case the release layer is released from the laminate, and includes both of the following cases: (1') the release layer dissolves and is released, and (2') the release layer does not dissolve, but is detached and released due to neutralization, swelling or the like. For example, the separation and recovery method may include releasing the release layer from the laminate and recovering the base material.

Since an object of the present invention is to obtain a polyolefin base material after release as a recycling base material or a recycled base material, it is preferable to remove as much of the release layer and the like as possible from the polyolefin base material. Specifically, it is preferable to release at least 50 mass% or more within 100 mass% of the release layer in the area and film thickness direction. It is preferable to release more preferably 60 mass% or more, still more preferably 80 mass% or more, and particularly preferably 90 mass% or more thereof.

<Release solution>

The release solution may be any solution that contains a surfactant having an HLB value of 7 or more and a defoamer having an HLB value of 1 to 3, and swells or dissolves the release layer, and can be appropriately selected in consideration of ease of release of the release layer to be described below. Examples of such a release solution include an aqueous neutral solution, a basic aqueous solution, an acidic aqueous solution, and a fluorine solvent. In consideration of the environment and maintaining properties of recycled materials using the recovered polyolefin base materials, an aqueous solution is preferable. These release solutions may be heated. The release solution contains preferably 50 mass% or more, more preferably 70 mass% or more, and still more preferably 80 mass% or more of water.

In one embodiment, in order to release a urethane-based adhesive layer generally used in the packaging material, the release solution is more preferably a basic aqueous solution containing a basic compound.

[Surfactant having HLB value of 7 or more]

The surfactant having an HLB value of 7 or more mainly has a function of improving releasability of the release layer. This is thought to be because the action of the surfactant having an HLB value of 7 or more makes it easier for the release solution to permeate into release layers such as a primer layer, a printing layer, and an adhesive layer, and promotes releasability. In addition, it is thought that, when the surfactant having an HLB value of 7 or more is adsorbed on the surface of the released component and the base material, re-adhesion of the finely dispersed printing layer and the like is prevented.

In addition, when the amount of the laminate relative to the release solution is increased during separation and recovery, the laminate and the separated base material tend to curl while winding together with the released ink pieces, and even if they are immersed in the release solution, it is difficult to cleanly remove ink pieces and the like caught in the curling. However, when the release solution contains a surfactant having an HLB value of 7 or more, the surfactant is adsorbed to the surface of the laminate and the separated base material, and curling is curbed. As a result, it is possible to improve releasability and prevent re-adhesion.

The HLB value is an index value related to the affinity of the surfactant for water and oils, and is uniformly distributed between an HLB value of 0 for a substance having no hydrophilic group and an HLB value of 20 for a substance having only a hydrophilic group. The concept of HLB was proposed by William. Griffin, Atlas Powder Company in 1949, several methods for determining it by calculation having been proposed, but in the embodiment of the present invention, the HLB value can be obtained from the following formula according to the Griffin method.

$$\text{HLB} = 20 \times [(\text{the molecular weight of the hydrophilic group contained in the surfactant})/(\text{the molecular weight of the surfactant})] \qquad \text{Formula)}$$

Examples of hydrophilic groups contained in the surfactant include hydroxyl groups and ethyleneoxy groups.

It is important that the HLB value of the surfactant in the embodiment of the present invention be 7 or more. When the HLB is 7 or more, excellent releasability and re-adhesion prevention properties are exhibited as described above. The HLB value of the surfactant is preferably 8 or more, and more preferably 10 or more. In addition, the HLB value of the surfactant is preferably 20 or less, more preferably 19 or less, and still more preferably 17 or less. If the HLB value is 20 or less, this is preferable because a defoaming property is excellent.

Examples of types of the surfactant having an HLB value of 7 or more include nonionic, anionic, cationic, and amphoteric surfactants, and preferable types, and addition amounts can be appropriately selected and used according to required properties. In consideration of releasability and foaming properties, at least one selected from the group consisting of anionic surfactants and nonionic surfactants is preferable.

In addition, if a surfactant has a structure in which an alkylene oxide (hereinafter referred to as AO) is added, this is preferable because the releasability and re-adhesion prevention property are improved.

(Nonionic surfactant)

The nonionic surfactant is not particularly limited as long as it has an HLB value of 7 or more, and is preferably an alkylene oxide adduct to which alkylene oxide is added. The nonionic surfactant is more preferably a compound obtained by adding alkylene oxide to alcohols having active hydrogen, a compound obtained by adding alkylene oxide to amines, or a compound obtained by adding alkylene oxide to fatty acids. The above addition may be either random addition or block addition. In addition, alkylene oxide preferably has 2 to 4 carbon atoms.

The nonionic surfactant is more preferably an alcohol-based nonionic surfactant obtained by adding an alkylene oxide having 2 to 4 carbon atoms to alcohols.

[Alcohol-based nonionic surfactant]

Examples of alcohol-based nonionic surfactants include alkylene oxide adducts of primary or secondary alcohols having a total of 8 to 24 carbon atoms and alkylene oxide adducts of alkylphenol having a total of 8 to 12 carbon atoms. The primary or secondary alcohols having a total of 8 to 24 carbon atoms may be either saturated or unsaturated.

Examples of primary or secondary alcohols having a total of 8 to 24 carbon atoms include lauryl alcohol, stearyl alcohol, oleyl alcohol, dodecyl alcohol, arachidyl alcohol, behenyl alcohol, lignoceryl alcohol, and myristyl alcohol.

In addition, examples of alkylene oxide added to alcohols include ethylene oxide, propylene oxide, and butylene oxide, and it is preferable that ethylene oxide be essential. The number of moles of alkylene oxide added with respect to 1 mol of alcohols or alkylphenol is preferably 1 to 100 mol, and more preferably 2 to 50 mol. If the number is within the above range, it is preferable because releasability is particularly excellent.

[Fatty acid-based nonionic surfactant]

The structure of the fatty acid-based nonionic surfactant is not particularly limited, and examples thereof include an alkylene oxide adduct of higher fatty acids having a total of 10 to 24 carbon atoms, oils and fats composed of an ester of the above saturated or unsaturated higher fatty acids having a total of 10 to 24 carbon atoms and glycerin, and an alkylene oxide adduct of a mixture containing the above oils and fats and a 2- to 10-valent polyhydric alcohol. The higher fatty acids having a total of 10 to 24 carbon atoms may be either saturated or unsaturated.

Examples of higher fatty acids having a total of 10 to 24 carbon atoms include saturated higher fatty acids such as lauric acid, myristic acid, palmitic acid, stearic acid, arachic acid, and behenic acid; and unsaturated higher fatty acids such as palmitoleic acid, oleic acid, elaidic acid, linoleic acid, linolenic acid, erucic acid, and ricinoleic acid. Examples of 2- to 10-vlaent polyhydric alcohols include ethylene glycol, propylene glycol, glycerin, polyglycerin, sorbitol, sorbitan, and sucrose. The type of alkylene oxide and the number of moles added are the same as those described in the above section [Alcohol-based nonionic surfactant].

[Amine-based nonionic surfactant]

Examples of amine-based nonionic surfactants include AO adducts of saturated or unsaturated primary or secondary amines having a total of 8 to 36 carbon atoms. Examples of amines include 2-ethylhexyl amine, di-2-ethylhexyl amine, lauryl amine, dilauryl amine, tetradecyl amine, ditetradecyl amine, hexadecyl amine, dihexadecyl amine, stearyl amine, distearyl amine, oleyl amine, and dioleoyl amine. In addition, the type of AO and the number of moles added are the same as above.

(Anionic surfactant)

The anionic surfactant having an HLB value of 7 or more is preferably a non-soap surfactant, and examples thereof include sulfonic acid-based anionic surfactants, sulfate ester-based anionic surfactants, carboxylic acid-based anionic surfactants, and phosphate ester-based anionic surfactants.

[Sulfonic acid-based anionic surfactant]

Examples of sulfonic acid-based anionic surfactants include alkylene oxide adducts of alkylsulfonic acid, alkylbenzenesulfonic acid, alkylnaphthalenesulfonic acid, alkyldiphenyl ether disulfonic acid, alkylmethyl taurine, sulfosuccinic acid diester, and sulfonic acid, and salts thereof. As specific examples, hexane sulfonic acid, octanesulfonic acid, decane sulfonic acid, dodecane sulfonic acid, toluene sulfonic acid, cumene sulfonic acid, octyl benzene sulfonic acid, dodecylbenzene sulfonic acid, dinitrobenzene sulfonic acid, lauryl dodecyl phenyl ether disulfonic acid, and the like can be used.

[Sulfate ester-based anionic surfactant]

Examples of sulfate ester-based anionic surfactants include sulfate esters (alkyl ether sulfate esters), alkylene oxide adducts of sulfate esters, and salts thereof. As specific examples, lauryl sulfate, myristyl sulfate, polyoxyethylene lauryl ether sulfate and the like can be used.

[Carboxylic acid-based anionic surfactant]

Examples of carboxylic acid-based anionic surfactants include alkylene oxide adducts of alkylcarboxylic acid, alkylbenzenecarboxylic acid, and carboxylic acid, and salts thereof. As specific examples, lauric acid, myristic acid, palmitic acid, stearic acid, polyoxyethylene lauryl ether acetic acid, polyoxyethylene tridecyl ether acetic acid and the like can be used.

[Phosphate ester-based anionic surfactant]

Examples of phosphate ester-based anionic surfactants include phosphate esters (alkyl ether phosphate esters), alkylene oxide adducts of phosphate esters, and salts thereof. As specific examples, octyl phosphate ester, lauryl phosphate ester, tridecyl phosphate ester, myristyl phosphate ester, cetyl phosphate ester, stearyl phosphate ester, polyoxyethylene octyl ether phosphate ester, polyoxyethylene lauryl ether phosphate ester and the like can be used.

The anionic surfactant having an HLB value of 7 or more preferably has an alkyl group having 2 to 24 carbon atoms or an alkenyl group having 2 to 24 carbon atoms, and more preferably has an alkyl group having 8 to 18 carbon atoms. The alkyl group or the alkenyl group may be linear or branched.

In addition, when the anionic surfactant having an HLB value of 7 or more is an alkylene oxide adduct, as the alkylene oxide, for example, ethylene oxide, propylene oxide, and butylene oxide may be exemplified, and ethylene oxide is preferable. The number of moles of alkylene oxide added with respect to 1 mol of alcohols or alkylphenol is preferably 1 to 12 mol, and more preferably 1 to 8 mol. If the number is within the above range, it is preferable because releasability is particularly excellent.

Examples of salts constituting the above anionic surfactants include metal salts such as sodium, potassium, magnesium, and calcium. These salts may be used alone or two or more thereof may be used in combination.

Among these, in consideration of the releasability and re-adhesion prevention property, the anionic surfactant is preferably a sulfonate type or a phosphate type, and more preferably alkyl sulfonate, polyoxyalkylene alkyl ether sulfonate, polyoxyalkylene alkyl ether phosphate or the like.

(Cationic surfactant)

Examples of cationic surfactants having an HLB value of 7 or more include alkylamine salts and quaternary ammonium salts. Specifically, stearyl amine acetate, trimethyl cyanmonium chloride, trimethyl tallow ammonium chloride, dimethyldioleylammonium chloride, methyloleyldiethanol chloride, tetramethylammonium chloride, laurylpyridinium chloride, laurylpyridinium bromide, laurylpyridinium disulfate, cetylpyridinium bromide, 4-alkylmercaptopyridine, poly(vinylpyridine)-dodecyl bromide, dodecylbenzyltriethylammonium chloride and the like can be used.

(Amphoteric surfactant)

Examples of amphoteric surfactants include lauryl dimethylaminoacetic acid betaine, 2-alkyl-N-carboxymethyl-N-hydroxyethylimidazolinium betaine, coconut oil fatty acid amidopropyl dimethylaminoacetic acid betaine, polyoctylpolyaminoethylglycine, and imidazoline derivatives.

These surfactants having an HLB value of 7 or more may be used alone or two or more thereof may be used in combination. The content of the surfactant having an HLB value of 7 or more in the release solution based on the mass of the release solution is preferably in a range of 0.001 to 10 mass%, more preferably in a range of 0.005 to 7 mass%, still more preferably 0.03 to 5 mass%, and yet more preferably 0.05 to 3 mass%. If the content is 0.001 mass% or more, this is preferable because the releasability and re-adhesion prevention property are excellent, and if the content is 10 mass% or less, this is preferable in consideration of a defoaming property.

[Defoamer]

In the embodiment of the present invention, when a defoamer having an HLB value range of 1 to 3 is used in combination with the above surfactant having an HLB value of 7 or more, a favorable defoaming property can be exhibited without deteriorating the releasability and re-adhesion prevention property, and foaming caused by the surfactant can be minimized. Examples of defoamers include silicone compounds and non-silicone compounds.

(Silicone compound)

Examples of silicone compounds include emulsion type, self-emulsion type, oil type, oil compound type, and solvent type compounds.

The emulsion type is a silicone defoamer that emulsifies a silicone oil compound with an activator to form an O/W type (oil in water type) emulsion, and examples thereof include "KM-89," and "KM-98" (commercially available from Shin-Etsu Chemical Co., Ltd.), "FC2913," and "SILFOAMSE47" (commercially available from ASAHIKASEI Wacker Silicone Co., Ltd.), and "BYK-015," and "BYK-1640" (commercially available from BYK Japan).

The self-emulsion type is a silicone defoamer with a 100% active component that is in an emulsion state when diluted with water and mixed, and examples thereof include "KS-540," and "X-50-1176" (commercially available from Shin-Etsu Chemical Co., Ltd.), and "SILFOAM SD670," and "SILFOAM SD850" (commercially available from ASAHIKASEI Wacker Silicone Co., Ltd.).

The oil type is a defoamer with 100% silicone oil that does not contain solvents or additives, and examples thereof include "KM-89," and "KM-98" (commercially available from Shin-Etsu Chemical Co., Ltd.), "AK350," and "AK12500" (commercially available from ASAHIKASEI Wacker Silicone Co., Ltd.), and "BYK-1770" (commercially available from BYK Japan).

The oil compound type is a silicone defoamer obtained by adding silica particles to a silicone oil, and examples thereof include "KM-89," and "KM-98" (commercially available from Shin-Etsu Chemical Co., Ltd.), "SILFOAM SC370," and "PULPSIL22274VP" (commercially available from ASAHIKASEI Wacker Silicone Co., Ltd.), and "BYK-017," and "BYK-018" (commercially available from BYK Japan).

The solvent type is a silicone defoamer obtained by dissolving silicone oil in a solvent, and examples thereof include "KM-89," and "KM-98" (commercially available from Shin-Etsu Chemical Co., Ltd.) and "BYK-019," and "BYK-025" (commercially available from BYK Japan).

(Non-silicone compound)

Examples of non-silicone compounds include fatty acid ester compounds, urea resin compounds, paraffin compounds, polyoxyalkylene glycol compounds, acrylic ester copolymers, ester polymers, ether polymers, amide polymers, mineral oil emulsion types, polysiloxane adducts, fluorine compounds, vinyl polymers, acetylene alcohols, acrylic polymers, special vinyl polymers, ethylene glycol, and higher alcohols (octyl alcohol, cyclohexanol, etc.).

The defoamers may be used alone or two or more thereof may be used in combination. The content of the defoamer in the release solution based on the mass of the release solution is preferably in a range of 0.0001 to 5 mass%, more preferably in a range of 0.001 to 4.5 mass%, still more preferably 0.01 to 4 mass%, yet more preferably 0.02 to 3.5 mass%, and particularly preferably 0.03 to 3 mass%. If the content is 0.0001 mass% or more, a defoaming property is excellent, and if the content is 5 mass% or less, the releasability and re-adhesion prevention property are excellent.

The defoamer has favorable alkali resistance, and is preferably at least one selected from the group consisting of an emulsion type silicone compound, a self-emulsion type silicone compound, and a non-silicone compound because it is difficult for the releasability and re-adhesion prevention property to deteriorate when combined with the surfactant having an HLB of 7 or more.

[Basic compound]

As described above, in the embodiment of the present invention, as the release solution, in order to release a urethane-based adhesive layer generally used in the packaging material, a basic aqueous solution containing a basic compound is preferably used.

The basic compound is not particularly limited, and for example, sodium hydroxide (NaOH), potassium hydroxide (KOH), calcium hydroxide (Ca(OH)$_2$), ammonia, barium hydroxide (Ba(OH)$_2$), and sodium carbonate (Na$_2$CO$_3$) are preferably used. At least one selected from the group consisting of sodium hydroxide and potassium hydroxide is more preferable.

The content of the basic compound in the basic aqueous solution based on the mass of the basic aqueous solution is in a range of preferably 0.5 to 20 mass%, more preferably 1 to 15 mass%, and still more preferably 3 to 15 mass%. If the content is within the above range, the basic aqueous solution can retain basicity sufficient to release the release layer to be described below by dissolving or swelling and recover the polyolefin base material.

The release solution permeates through the end parts of the laminate, comes into contact with the release layer, dissolves or swells it, and thus separates the polyolefin base material and the release layer. Therefore, in order to proceed with the release step efficiently, it is preferable to expose the release layer to the cross section of the laminate when it is cut or crushed, and immersed in the release solution. In such a case, it is possible to release the base material layer in a shorter time.

The temperature of the release solution when the laminate is immersed is in a range of preferably 25 to 120°C, more preferably 30 to 120°C, and particularly preferably 30 to 80°C. The time of immersion in the release solution is in a range of preferably 1 minute to 24 hours, more preferably 1 minute to 12 hours, and still more preferably 1 minute to 6 hours. The amount of the release solution used is in a range of preferably 5 to 100,000, and more preferably 10 to 10,000 times the mass of the laminate, and in order to improve release efficiency, it is preferable to stir or circulate the release solution. The rotation speed is preferably 80 to 5,000 rpm, and more preferably 80 to 4,000 rpm.

After the release layer is released from the laminate and the polyolefin base material is recovered, the obtained polyolefin base material is subjected to the step of washing with water and drying, and a recycling base material can be obtained. The removal rate of the release layer on the surface of the base material with respect to the area of the release layer before releasing is preferably 70% or more, more preferably 80% or more, and particularly preferably 90% or more.

In addition, the obtained recycling base material can be processed into pellets using an extruder or the like and reused as a recycled resin.

<Laminate>

In the embodiment of the present invention, the laminate includes at least a polyolefin base material layer and a release layer in contact with the polyolefin base material layer. When the release layer in contact with the polyolefin base material is released with the above release solution, the polyolefin base material can be recovered and recycled.

<Release layer>

The release layer in the embodiment of the present invention is a layer that can be released from the polyolefin base material using a known release solution and is a layer containing a water-soluble resin or a compound having an acidic group. It is speculated that, when the laminate has a release layer containing a water-soluble resin or a compound having an acidic group, the release solution containing a surfactant having an HLB value of 7 or more and a defoamer having an HLB value of 1 to 3 permeates into the release layer, the release layer becomes more likely to swell, and detachment of the base material is promoted, and as a result, the releasability of the printing layer and the adhesive layer is significantly improved.

The release layer may be a cured product of a water-soluble resin or a compound having an acidic group as long as it is water-soluble or has an unreacted acidic group after curing.

In addition, since the release layer is a layer in contact with the polyolefin base material layer, it is preferably at least one layer selected from the group consisting of a primer layer, a printing layer and an adhesive layer. That is, at least one layer selected from the group consisting of a primer layer, a printing layer and an adhesive layer is preferably a layer containing a water-soluble resin or a compound having an acidic group. The compound having an acidic group may be a resin or a low-molecular-weight compound. These water-soluble resins or compounds having an acidic group may be used alone or two or more thereof may be used in combination.

In the at least one layer selected from the group consisting of a primer layer, a printing layer and an adhesive layer, a resin component (hereinafter referred to as a binder resin) constituting the layer may include a water-soluble resin or a resin having an acidic group, or may include a binder resin and a low-molecular-weight compound having an acidic group.

Hereinafter, cases in which the release layer is a primer layer, a printing layer, and an adhesive layer will be described.

[Primer layer]

When the release layer is a primer layer, the primer layer is disposed in contact with the polyolefin base material, contains a water-soluble resin or a compound having an acidic group, and has a function of releasing the polyolefin base material by dissolving or detaching it with a release solution.

(Water-soluble resin)

The water-soluble resin may be any resin that can swell or dissolve in water and be released from the polyolefin base material. Water may be heated to a temperature of about 25 to 100°C. Thereby, the primer layer can be released with water (including hot water).

Such resins can be selected from among known resins as long as they do not impair water solubility, and examples thereof include water-soluble polyester resins, water-soluble polyamide resins, water-soluble polyimide resins, water-soluble acrylic resins, water-soluble polyurethane resins, water-soluble polyallylamine resins, water-soluble phenolic resins, water-soluble epoxy resins, water-soluble phenoxy resins, water-soluble urea resins, water-soluble melamine resins, polyvinyl alcohol resins, and modified products of these resins. These may be used alone or two or more thereof may be used in combination. Among these, a polyvinyl alcohol (PVA) resin is preferably used in consideration of ease of availability and releasability.

When the water-soluble resin has film-forming properties, the water-soluble resin may be used as the binder resin constituting the primer layer.

Examples of water-soluble resins include a water-soluble resin having an acidic group and a water-soluble resin having no acidic group. The water-soluble resin may be, for example, a water-soluble resin having no acidic group.

As polyvinyl alcohol resins, in addition to unmodified polyvinyl alcohols, modified polyvinyl alcohols obtained by copolymerizing various monomers during production of vinyl ester resins and saponifying this, and various post-modified polyvinyl alcohols obtained by introducing various functional groups into unmodified polyvinyl alcohols through post-modification may be used. In addition, the modified polyvinyl alcohols may be additionally subjected to post-modification. These modifications can be performed within a range in which water solubility of the polyvinyl alcohol resin is not impaired.

These resins may be used alone or two or more thereof may be used in combination.

Preferable examples of polyvinyl alcohol resins include resins containing a structural unit having a primary hydroxyl group in the side chain and ethylene-modified polyvinyl alcohol resins. Among these, polyvinyl alcohol resins containing a structural unit having a primary hydroxyl group in the side chain are preferable because they have excellent melt moldability and excellent water solubility. The number of primary hydroxyl groups in these structural units is generally 1 to 5, preferably 1 to 2, and more preferably 1. In addition, it is preferable to have a secondary hydroxyl group in addition to the primary hydroxyl group. Examples of polyvinyl alcohol resins containing a structural unit having a primary hydroxyl group in the side chain include modified polyvinyl alcohol resins containing 1,2-diol structural units in the side chain.

In the embodiment of the present invention, the degree of saponification (measured according to JIS K 6726) of the polyvinyl alcohol resin is generally 60 to 100 mol%. In addition, a preferable range of the degree of saponification varies depending on the modified species, and for example, in the case of unmodified polyvinyl alcohol resins, the range is generally 60 to 99.9 mol%, preferably 70 to 99.0 mol%, and more preferably 75 to 98.5%. The degree of saponification of the modified polyvinyl alcohol resin containing 1,2-diol structural units in the side chain is generally 60 to 99.9 mol%, preferably 65 to 99.8 mol%, and more preferably 70 to 99.5 mol%. If the degree of saponification is too low, water solubility tends to decrease. The degree of saponification of the ethylene-modified polyvinyl alcohol resin modified with a small amount of ethylene is generally 60 mol% or more, preferably 70 to 99.5 mol%, and particularly preferably 75 to 99.0 mol%.

If the degree of saponification is within the above range, this is preferable because water solubility is excellent and releasability is favorable. In addition, this is preferable because coating properties are also excellent when a primer layer is formed.

The average degree of polymerization (measured according to JIS K 6726) of the polyvinyl alcohol resin is generally 100 to 3,000, preferably 150 to 2,000, more preferably 180 to 1,000, and particularly preferably 200 to 800.

(Compound having acidic group)

As the compound having an acidic group, a resin having an acidic group or a low-molecular-weight compound having an acidic group may be used. Thereby, the primer layer can be released with the above basic aqueous solution. Examples of resins having an acidic group include a water-soluble resin having an acidic group and a water insoluble resin having an acidic group. The resins having an acidic group may be, for example, a water-soluble resin or an insoluble resin as long as it has an acidic group.

For the resin having an acidic group, examples of resins include cellulose resins, urethane resins, polyamide resins, vinyl chloride/vinyl acetate copolymers, ketone resins, polyester resins, and (meth)acrylic resins. Examples of acidic groups include a carboxy group, a phosphate group, a sulfo group, a sulfino group, and esters or salts thereof.

In addition, as the resin having an acidic group, a rosin-modified resin having an acid value such as a maleated rosin or a fumarated rosin can be used.

In addition, as the resin having an acidic group, radical copolymers such as styrene-(meth)acrylic resins, styrene-(anhydrous) maleic acid resins, and terpene-(anhydrous) maleic acid resins, which are obtained by copolymerizing polymerizable monomers having an acidic group such as polymerizable monomers having a carboxy group such as itaconic acid, maleic acid, fumaric acid, and cinnamic acid; polymerizable monomers that are acid anhydrides such as itaconic anhydride and maleic anhydride; polymerizable monomers having a sulfonic acid group such as sulfonated styrene; and polymerizable monomers having a sulfonamide group such as vinyl benzene sulfonamide, and acid-modified polyolefin resins can be used.

These may be used alone or two or more thereof may be used in combination.

The low-molecular-weight compound having an acidic group refers to a compound having no molecular weight distribution and a compound having a molecular weight of 1,000 or less. Examples of such compounds include saturated fatty acids such as lauric acid, myristic acid, palmitic acid, margaric acid, and stearic acid; unsaturated fatty acids such as oleic acid, linoleic acid, linolenic acid, arachidonic acid, eicosapentaenoic acid, docosahexaenoic acid, and sorbic acid; hydroxy acids such as lactic acid, malic acid, and citric acid; aromatic carboxylic acids such as benzoic acid, phthalic acid, isophthalic acid, terephthalic acid, salicylic acid, gallic acid, mellitic acid, and cinnamic acid; dicarboxylic acids such as oxalic acid, malonic acid, succinic acid, glutaric acid, adipic acid, fumaric acid, and maleic acid; tricarboxylic acids such as aconitic acid; oxocarboxylic acids such as pyruvic acid and oxaloacetic acid; carboxylic acid derivatives such as amino acid and nitrocarboxylic acid; and acid anhydrides such as trimellitic anhydride, and pyromellitic anhydride.

The low-molecular-weight compound having an acidic group can form a primer layer by being used in combination with the above resin having an acidic group or a known binder resin constituting a known primer layer.

The primer layer preferably contains a compound having an acidic group in consideration of suitability for recoating. In addition, it preferably contains a urethane resin having an acidic group, an acrylic resin having an acidic group, or a rosin-modified resin in consideration of printability. The primer layer may contain one of these resins alone or a combination of two or more thereof.

[Urethane resin having acidic group]

The urethane resin having an acidic group is not particularly limited, and examples thereof include urethane resins obtained by reacting a polyol having an acidic group with a polyisocyanate, resins obtained by acid-modifying hydroxyl groups in a urethane resin obtained by reacting a polyol and a polyisocyanate, and resins obtained by acid-modifying amino groups in a urethane urea resin obtained by reacting a polyamine with isocyanate groups in a urethane resin obtained by reacting a polyol and a polyisocyanate.

In addition, as the urethane resin having an acidic group, a resin obtained by reacting a polyol containing a hydroxy acid and a polyisocyanate may be used. When a hydroxy acid is used as a polyol, an acid value derived from a carboxy group can be imparted to the urethane resin, and the releasability can be improved. In addition, when the urethane resin having an acidic group has an isocyanate group, a part of the isocyanate group may be reacted with a polyamine to introduce a urea bond to form a urethane urea.

«Polyol»

The polyol is a general term for compounds having at least two hydroxyl groups in one molecule. The number average molecular weight of the polyol is preferably 500 to 10,000, and more preferably 1,000 to 5,000. The number average molecular weight is calculated from the hydroxyl value of the polyol, and the hydroxyl value refers to a value measured according to JIS K 0070. If the number average molecular weight of the polyol is 500 or more, the flexibility of the primer layer becomes excellent, and adhesion to the polyolefin base material is improved. If the number average molecular weight is 10,000 or less, blocking resistance to the polyolefin base material is excellent.

The polyol is not particularly limited, and more preferably, at least one polyol selected from the group consisting of polyester polyols, polyether polyols, and polycarbonate polyols is used. Furthermore, the polyol may also include other dimer diols, hydrogenated dimer diols, castor oil-modified polyols and the like.

That is, the urethane resin preferably contains a structural unit derived from at least one polyol selected from the group consisting of polyester polyols, polyether polyols, and polycarbonate polyols. It is more preferable to contain a structural unit derived from the polyester polyol because the releasability is improved by alkaline hydrolysis of the ester bond moiety of the polyester polyol.

The content of the structural unit derived from the polyol with respect to a total amount of the urethane resin is preferably 10 to 75 mass%, more preferably 15 to 70 mass%, and still more preferably 20 to 65 mass%. The content of the structural unit derived from the polyester polyol with respect to a total amount of the structural unit derived from the polyol is preferably 5 mass% or more, more preferably 30 mass% or more, still more preferably 60 mass% or more, and particularly preferably 80 mass% or more.

<<Hydroxy acid>>

The polyol may also contain a hydroxy acid. The hydroxy acid is a compound having both a hydroxyl group, which is an active hydrogen group, and an acidic functional group in one molecule. The acidic functional group is a functional group that can be neutralized with potassium hydroxide when an acid value is measured, and specifically, a carboxy group and a sulfonic acid group may be exemplified, and a carboxy group is preferable. As such hydroxy acids, for example, dimethylolalkanoic acids such as 2,2-dimethylolpropionic acid, 2,2-dimethylolbutanoic acid, and 2,2-dimethylolvaleric acid are preferably used.

<<Polyisocyanate>>

The polyisocyanate is not particularly limited, and can be selected from among conventionally known polyisocyanates. The polyisocyanate preferably includes diisocyanate or triisocyanate, and more preferably includes an aromatic, aliphatic or alicyclic diisocyanate. These may be used alone or two or more thereof may be used in combination.

«Polyamine»

The polyamine used to form urethane urea is not particularly limited, and is preferably a diamine compound. In addition, a diamine having a hydroxyl group may be used because it can introduce a hydroxyl group into the urethane resin.

The acid value of the urethane resin having an acidic group is preferably 15 mg KOH/g or more, more preferably 15 to 70 mg KOH/g, and still more preferably 20 to 50 mg KOH/g. If the acid value is 15 mg KOH/g or more, this is preferable because the releasability with the release solution becomes favorable, and if the acid value is 70 mg KOH/g or less, this is preferable because adhesion to the base material and retort resistance become favorable.

The hydroxyl value of the urethane resin is preferably 1 to 35 mg KOH/g, and more preferably 10 to 30 mg KOH/g. If the hydroxyl value is 1 mg KOH/g or more, this is preferable because the releasability with the release solution becomes favorable, and if the hydroxyl value is 35 mg KOH/g or less, this is preferable because adhesion to the base material becomes favorable.

The weight average molecular weight of the urethane resin having an acidic group is preferably 10,000 to 100,000, more preferably 15,000 to 70,000, and still more preferably 15,000 to 50,000. The molecular weight distribution (Mw/Mn) of the urethane resin is preferably 6 or less. Mw represents weight average molecular weight, and Mn represents number average molecular weight. If the molecular weight distribution is 6 or less, the releasability, drying properties of the primer composition, and the retort resistance are excellent. In addition, when the molecular weight distribution is smaller, that is, the molecular weight distribution is sharper, dissolution or detaching action with the release solution occurs uniformly, and the releasability of the polyolefin base material is improved. The molecular weight distribution is more preferably 5 or less, and still more preferably 4 or less. In addition, the molecular weight distribution is preferably 1.5 or more, and more preferably 1.2 or more.

In this specification, Mw, Mn and the molecular weight distribution (Mw/Mn) are values in terms of polystyrene determined by gel permeation chromatography (GPC).

The urethane resin having an acidic group may have an amine value. When the urethane resin has an amine value, the amine value is preferably 0.1 to 20 mg KOH/g, and more preferably 1 to 10 mg KOH/g. Within the above range, adhesion to the base material is excellent.

The number of urethane bonds of the polyurethane resin having an acidic group is preferably 1 to 3 mmol/g, and more preferably 1.5 to 2 mmol/g. In addition, the number of urea bonds is preferably 0 to 3 mmol/g, and more preferably 0.2 to 1 mmol/g. In addition, a sum of the number of urethane bonds and the number of urea bonds is preferably 1 to 6 mmol/g, and more preferably 1.7 to 3 mmol/g.

When the number of urethane bonds and the number of urea bonds are set to be within the above range, the releasability and re-adhesion prevention property are improved.

[Acrylic resin having acidic group]

Examples of acrylic resins having an acidic group include polymers obtained by polymerizing monomers including (meth)acrylic monomers having acidic groups such as (meth)acrylic acid and maleic acid; and resins in which monomers including (meth)acrylic monomers having a hydroxyl group or a glycidyl group are polymerized, the functional group is then modified, and a carboxy group is introduced (for example, maleic anhydride-modified resin).

The acid value of the acrylic resin having an acidic group is preferably 50 mg KOH/g or more, and more preferably 100 mg KOH/g or more.

[Rosin-modified resin]

The rosin-modified resin is a resin prepared using rosin as one of raw materials. Rosin contains a mixture of resin acids such as abietic acid, palustric acid, isopimaric acid, and levopimaric acid, and these resin acids contain hydrophilic and chemically active carboxy groups, and some of them contain a conjugated double bond. Therefore, various rosin-modified resins are prepared by combining and polycondensing polyhydric alcohols and polybasic acids, by adding resol, which is a condensate of phenol, to the benzene ring contained in the rosin framework, and by adding maleic acid or a maleic anhydride framework through a Diels-Alder reaction with maleic anhydride, which is a dienophile, or maleic acid. Various types of such rosin-modified resins are commercially available and these can be obtained and used.

Examples of rosin-modified resins include maleated rosin, fumarated rosin, rosin-modified maleic acid resins, rosin-modified fumaric acid resins, rosin-modified phenolic resins, rosin-modified alkyd resins, and rosin-modified polyester resins. In the embodiment of the present invention, any rosin-modified resin may be used, and among these, those containing a moiety derived from at least one selected from the group consisting of maleic acid, maleic anhydride, fumaric acid and fumaric anhydride in the structure are preferably used. A resin "containing a moiety derived from at least one selected from the group consisting of maleic acid, maleic anhydride, fumaric acid and fumaric anhydride in the structure" is prepared using at least one selected from the group consisting of maleic acid, maleic anhydride, fumaric acid and fumaric anhydride as a part of the raw material, and examples thereof include rosin-modified maleic acid resins obtained by polycondensing maleic acid or fumaric acid as a part of a polybasic acid, rosin-modified fumaric acid resins, maleated rosins having a structure in which maleic acid, maleic anhydride, fumaric acid or fumaric anhydride is added as a dienophile through a Diels-Alder reaction, fumarated rosins, and resins obtained by polymerizing other chemical species using functional groups contained therein.

The acid value of the rosin-modified resin is preferably 10 to 400 mg KOH/g, and more preferably 100 to 300 mg KOH/g.

(Other components)

The primer layer may contain a resin other than the water-soluble resin or the compound having an acidic group.

Examples of such resins include cellulose resins, polyamide resins, vinyl chloride resins such as vinyl chloride-vinyl acetate copolymer resins or vinyl chloride-acrylic copolymer resins, ethylene-vinyl acetate copolymer resins, vinyl acetate resins, acrylic resins, styrene resins, dammar resins, styrene-acrylic copolymer resins, polyester resins, alkyd resins, terpene resins, phenol-modified terpene resins, ketone resins, cyclized rubber, chlorinated rubber, butyral, polyacetal resins, petroleum resins, and modified resins thereof. These resins may be used alone or two or more thereof may be used in combination.

Among these, the primer layer preferably contains at least one resin selected from the group consisting of cellulose resins, vinyl chloride resins, rosin resins, and acrylic resins. It is more preferable to contain a vinyl chloride resin or an acrylic resin.

A mass ratio between the urethane resin having an acidic group and other resins (urethane resin having an acidic group:other resins) is preferably 95:5 to 50:50. If the mass ratio is within the above range, this is preferable because, when the primer layer is detached together with the printing layer in the basic aqueous solution, the printing layer in a thin film state is detached and recovery is easy.

The primer layer may contain an extender pigment. Examples of extender pigments include metal oxides such as silica, barium sulfate, kaolin, clay, calcium carbonate, magnesium carbonate, zinc oxide, and zirconium oxide. Among these, silica is preferable, and hydrophilic silica is more preferable.

The average particle size of the extender pigment is preferably 0.5 to 10 $\mu$m, and more preferably 1 to 8 $\mu$m. The content of the extender pigment in the primer layer is preferably 0.5 to 10 mass%, and more preferably 1 to 5 mass%. If the average particle size and the content of the extender pigment are within the above range, the wettability of the printing layer is improved, and the image quality is improved.

The primer layer may be a layer in which the above urethane resin having an acidic group is crosslinked with a curing agent.

When a crosslinking structure is introduced into the primer layer, penetration and bleeding of the printing layer formed on the primer layer is curbed, and excellent image quality can be exhibited.

Examples of curing agents include a polyisocyanate. The polyisocyanate is not particularly limited, and can be selected from among conventionally known polyisocyanates, and examples thereof include aliphatic polyisocyanates and aromatic and aliphatic polyisocyanates. These may be used alone or two or more thereof may be used in combination.

The primer layer may further contain known additives. Examples of known additives include dispersants, wetting agents, adhesion aids, leveling agents, defoamers, antistatic agents, viscosity modifiers, metal chelates, trapping agents, anti-blocking agents, wax components other than the above components, and silane coupling agents.

The thickness of the primer layer is in a range of preferably 0.5 to 3.0 $\mu$m, more preferably 0.6 to 2.0 $\mu$m, and still more preferably 0.8 to 1.5 $\mu$m, and can be formed using a known method.

[Printing layer]

The printing layer is a layer that forms an arbitrary printed pattern for the purpose of decoration, imparting sense of beauty, and displaying contents, expiration date, manufactures, sellers and the like, and also includes a solid printing layer.

When the release layer is a printing layer, the printing layer is disposed in contact with the polyolefin base material, contains a water-soluble resin or a compound having an acidic group, and has a function of releasing the polyolefin base material by dissolving or detaching it with a release solution. The printing layer preferably contains a water-soluble resin or a compound having an acidic group (excluding the water-soluble resin), and a colorant. In addition, the method of forming the printing layer is not limited and any known method can be used for formation.

The printing layer preferably contains a compound containing an acidic group in consideration of suitability for recoating. In addition, in consideration of printability, it is preferable to contain a urethane resin having an acidic group, an acrylic resin having an acidic group, or a rosin-modified resin. The printing layer may contain one of these resins alone or a combination of two or more thereof.

For the water-soluble resin and the compound having an acidic group, the urethane resin having an acidic group, the acrylic resin having an acidic group and the rosin-modified resin, the descriptions of (water-soluble resin), (compound having an acidic group), [urethane resin having acidic group], [acrylic resin having acidic group] and [rosin-modified resin] in the above section [Primer layer] can be used.

(Colorants)

The printing layer may be colored or colorless, and contains known colorants used in printing inks and paints. Such colorants are not particularly limited, and in addition to inorganic pigments, organic pigments, and dyes, metal powders that impart metallic luster, near-infrared absorbing materials, and ultraviolet absorbing materials may be used.

Examples of inorganic pigments include colored pigments such as titanium oxide, red oxide, dark blue, ultramarine, carbon black, and graphite; and extender pigments such as calcium carbonate, kaolin, clay, barium sulfate, aluminum hydroxide, and talc.

As the organic pigments, soluble azo pigments, insoluble azo pigments, azo lake pigments, condensed azo pigments, copper phthalocyanine pigments, condensed polycyclic pigments and the like are preferably used.

However, the present invention is not limited thereto, and as the pigments, those listed under the generic name of color index can be appropriately used. Among these, when the release solution is a basic aqueous solution, a pigment that does not dissolve in the basic aqueous solution and has alkali resistance is preferable. When pigment dissolution is prevented, the basic aqueous solution can be easily reused.

The alkali resistance of pigments is generally estimated based on the framework or structure of the pigments, and examples of pigments with alkali resistance include inorganic pigments, C. I. pigment blue 15, and C. I. pigment yellow 83.

When the pigment is titanium oxide, the content of titanium oxide in the printing layer is preferably 20 to 80 mass%, and more preferably 30 to 75 mass%. In addition, when the pigment is an inorganic pigment other than titanium oxide, an extender pigment, or an organic pigment, the content of each of these pigment in the printing layer is preferably 0.5 to 60 mass%, and more preferably 10 to 50 mass%.

(Other components)

The printing layer may contain a pigment derivative or a resin type dispersant as a dispersant for a colorant.

The pigment derivative is a compound having a substituent introduced into a pigment framework, and the content of the pigment derivative based on the mass of the colorant is preferably 0.01 to 10 mass%, more preferably 0.05 to 6 mass%, and still more preferably 0.1 to 4 mass%. If the content is 0.01 mass% or more, the releasability of the polyolefin base material becomes excellent, and if the content is 10 mass% or less, re-adhesion of the printing layer can be prevented.

The resin type dispersant has a function of stabilizing dispersion in a printing ink or the like by adsorbing to a colorant and can be appropriately selected from among known resin type dispersants. The content of the resin type dispersant based on the mass of the colorant is preferably 0.01 to 30 mass%, more preferably 0.05 to 20 mass%, and still more preferably 0.1 to 10 mass%. If the content is 0.01 mass% or more, the releasability of the polyolefin base material becomes excellent, and if the content is 30 mass% or less, the water resistance of the printing layer becomes excellent.

The printing layer may contain a resin other than the water-soluble resin or the compound containing an acidic group.

Examples of such resins include nitrocellulose-based resins, fiber materials such as cellulose acetate and propionate, and chlorinated polypropylene-based, vinyl chloride-vinyl acetate copolymer-based, polyester-based, acrylic-based, urethane resin-based and acrylic urethane-based, polyamide-based, polybutyral-based, cyclized rubber-based, chlorinated rubber-based resins. These resins may be used alone or two or more thereof may be used in combination.

The thickness of the printing layer is preferably 0.1 $\mu$m or more and 100 $\mu$m or less, more preferably 0.1 $\mu$m or more and 10 $\mu$m or less, and still more preferably 1 $\mu$m or more and 5 $\mu$m or less.

[Adhesive layer]

When the release layer is an adhesive layer, the adhesive layer is disposed in contact with the polyolefin base material, contains a compound having an acidic group, and has a function of releasing the polyolefin base material by dissolving or detaching it with a release solution. When the adhesive layer contains a resin having an acidic group or a low-molecular-weight compound having an acidic group, the adhesive layer can be released using the above basic aqueous solution.

For the compound having an acidic group, the resin having an acidic group and the low-molecular-weight compound having an acidic group, the descriptions of (compound having an acidic group) in the above section [Primer layer] can be used.

In addition, the method of forming the adhesive layer is not limited and any known method can be used for formation.

In consideration of releasability, the adhesive layer may be a cured product of an adhesive containing a polyester polyol having an acidic group, and at least one polyisocyanate selected from the group consisting of aliphatic polyisocyanates and aromatic and aliphatic polyisocyanates. The cured product corresponds to a resin having an acidic group.

In addition, the adhesive layer may be a cured product of an adhesive containing a polyester polyol, at least one polyisocyanate selected from the group consisting of aliphatic polyisocyanates and aromatic and aliphatic polyisocyanates, and a low-molecular-weight compound having an acidic group.

(Polyester polyol)

The polyester polyol only needs to have an acidic group, and can be appropriately selected from among known polyester polyols. If such a polyester polyol is contained, this is preferable because it has ester bonds having high affinity with a basic compound when a basic aqueous solution is used as a release solution, and thus the releasability is improved. The polyester polyols may be used alone or two or more thereof may be used in combination.

The polyester polyol is not particularly limited, and polyester polyols obtained by reacting a carboxy group-containing component and a hydroxyl group-containing component; and polyester polyols obtained by ring-opening polymerization of lactones such as polycaprolactone, polyvalerolactone, and poly($\beta$-methyl-$\gamma$-valerolactone) are preferably used.

Examples of carboxy group-containing components include dibasic acids such as terephthalic acid, isophthalic acid, naphthalene dicarboxylic acid, phthalic anhydride, adipic acid, azelaic acid, sebacic acid, succinic acid, glutaric acid, tetrahydrophthalic anhydride, hexahydrophthalic anhydride, maleic anhydride, and itaconic anhydride, dialkyl esters thereof and mixtures thereof.

Examples of hydroxyl group-containing components include diols such as ethylene glycol, propylene glycol, diethylene glycol, dipropylene glycol, triethylene glycol, butylene glycol, neopentyl glycol, trimethylolpropane, glycerin, 1,6-hexanediol, 1,4-butanediol, 1,4-cyclohexanedimethanol, 3-methyl-1,5-pentanediol, 3,3'-dimethylolheptane, 1,9-nonanediol, polyoxyethylene glycol, polyoxypropylene glycol, polytetramethylene ether glycol, polyether polyol, polycarbonate polyol, polyolefin polyol, acrylic polyol, and polyurethane polyol, and mixtures thereof.

Two or more of the carboxy group-containing components and hydroxyl group-containing components may be used in combination.

The polyester polyol may be a polyester urethane polyol obtained by reacting a polyisocyanate with a hydroxyl group in a polyol. When the polyester polyol has a urethane bond, it exhibits excellent heat resistance and adhesion.

Examples of polyisocyanates include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate.

In addition, the polyester polyol may be an acid anhydride-modified product obtained by reacting an acid anhydride with a hydroxyl group in a polyol. Thereby, a carboxy group, which is an acidic group, can be introduced into the polyester polyol.

Examples of acid anhydrides include pyromellitic anhydride, mellitic anhydride, trimellitic anhydride, and trimellitic acid ester anhydride. Examples of trimellitic acid ester anhydrides include ethylene glycol bisanhydrotrimellitate, and propylene glycol bisanhydrotrimellitate.

The acid value of the polyester polyol is preferably 5.0 mg KOH/g or more, and more preferably 10.0 mg KOH/g or more. In addition, the acid value of the polyester polyol is preferably 100 mg KOH/g or less, and more preferably 80 mg KOH/g or less. If the polyester polyol has an acid value within the above range, when it is brought into contact with a release solution that is a basic aqueous solution, the basic aqueous solution permeates and is decomposed, and better releasability is exhibited.

When the adhesive contains a plurality of polyester polyols, the acid value of the entire polyester polyol can be determined from the acid value of each polyester polyol component and its mass ratio.

The number average molecular weight (Mn) of the polyester polyol is preferably 3,000 to 25,000, more preferably 5,000 to 20,000, and particularly preferably 7,000 to 15,000. If the number average molecular weight of the polyester polyol is 3,000 or more, it is possible to exhibit not only coating properties but also sufficient retort resistance, and if the number average molecular weight is 20,000 or less, this is preferable because not only coating properties but also releasability are improved.

For the polyester polyol component, in order to satisfy various physical properties required for the packaging material, a plurality of polyester polyol components may be used in combination, and for example, a polyester polyol having a number average molecular weight of 5,000 to 20,000 may be contained, and additionally, in order to improve adhesion to the base material, a polyester polyol having a number average molecular weight of less than 3,000 may be contained.

The content of the polyester polyol having a number average molecular weight of less than 3,000 based on a total mass of the polyester polyol is preferably 0 to 30 mass%, and more preferably 0 to 20 mass%. If the content is 30 mass% or less, it is possible to maintain retort resistance.

(Other polyols)

The adhesive constituting the adhesive layer may contain polyols other than polyester polyol. The polyols that may be contained other than polyester polyols are not particularly limited, and examples thereof include polycarbonate polyols, polycaprolactone polyols, polyether polyols, polyolefin polyols, acrylic polyols, silicone polyols, castor oil polyols, and fluorine polyols.

(Polyisocyanate)

The polyisocyanate to be combined with the above polyester polyol in order to form an adhesive layer is preferably at least one selected from the group consisting of known aliphatic polyisocyanates and aromatic and aliphatic polyisocyanates.

Examples of aliphatic polyisocyanates include acyclic aliphatic diisocyanates such as trimethylene diisocyanate, tetramethylene diisocyanate, hexamethylene diisocyanate, 1,2-propylene diisocyanate, and 1,2-butylene diisocyanate; alicyclic diisocyanates such as 1,4-cyclohexane diisocyanate, 1,3-cyclohexane diisocyanate, and 3-isocyanatomethyl-3,5,5-trimethylcyclohexyl isocyanate (hereinafter referred to as isophorone diisocyanate); and polyisocyanates derived from the above diisocyanates such as allophanate type, nurate type, biuret type, and adduct type derivatives, and composites thereof.

The derivative is preferably a nurate type or an adduct type, and more preferably an adduct type. The aliphatic polyisocyanate is preferably a polyisocyanate derived from hexamethylene diisocyanate (hereinafter referred to as HDI) because it is easy to secure the balance between releasability and laminate physical properties.

Examples of aromatic and aliphatic polyisocyanates include aromatic and aliphatic diisocyanates such as 1,3- or 1,4-xylylene diisocyanate or a mixture thereof, and $\omega,\omega'$-diisocyanate-1,4-diethylbenzene, 1,3- or 1,4-bis(1-isocyanate-1-methylethyl)benzene or a mixture thereof; and polyisocyanates derived from the above aromatic and aliphatic diisocyanates such as allophanate type, nurate type, biuret type, and adduct type derivatives, or composites thereof.

(Other polyisocyanates)

The adhesive may contain a polyisocyanate other than the aliphatic polyisocyanates and aromatic and aliphatic polyisocyanate as long as the effects of the present invention are not impaired. Examples of such polyisocyanates include aromatic diisocyanates such as toluene diisocyanate, and diphenylmethane diisocyanate; and polyisocyanates such as derivatives of the diisocyanates or composites thereof.

The addition ratio of the polyol and polyisocyanate may be such that the molar ratio (NCO/OH) of isocyanate groups in the polyisocyanate to the hydroxyl groups in the polyol is 0.3 to 10.0. The ratio is preferably 0.3 to 7.0, and more preferably 0.5 to 5.0.

(Other components)

In addition to silane coupling agents, phosphorus oxygen acids or derivatives thereof, leveling agents, defoamers, and reaction accelerators, the adhesive layer may contain inorganic fillers (for example, silica, alumina, mica, talc, aluminum flake, and glass flake), layered inorganic compounds, stabilizers (for example, antioxidants, heat stabilizers, ultraviolet absorbers, and hydrolysis inhibitors), rust inhibitors, thickeners, plasticizers, antistatic agents, lubricants, anti-blocking agents, colorants, fillers, crystal nucleating agents, catalysts for adjusting a curing reaction, and the like.

<Polyolefin base material layer>

In the embodiment of the present invention, the laminate has a polyolefin base material layer. Since the polyolefin base material has a small specific gravity and floats to the liquid level of the release solution, components that have been released from the release layer (particularly, highly lipophilic components) are likely to be re-adhered, but when a release solution containing a surfactant having an HLB value of 7 or more and a defoamer is used, it is possible to achieve both the releasability and re-adhesion prevention property.

For the polyolefin base material layer, for example, in addition to plastic base materials such as polyethylene (PE) and biaxially stretched polypropylene (OPP), sealant base materials such as low-density polyethylene (LDPE), linear low-density polyethylene (LLDPE), high-density polyethylene (HDPE), acid-modified polyethylene, unstretched polypropylene(CPP), acid-modified polypropylene, and copolymerized polypropylene may be exemplified.

The thickness of the polyolefin base material layer is not particularly limited, and may be appropriately selected depending on the purpose. The thickness is preferably 5 to 200 μm, and more preferably 10 to 150 μm.

<Structure of laminate>

The laminate in the embodiment of the present invention only needs to have a partial structure having at least a polyolefin base material layer and a release layer in contact with the polyolefin base material layer, and may further have other layers.

The laminate may have a base material layer other than the polyolefin base material. Examples of such base materials include metal vapor deposited layers of polyester resins, polyamide resins, polystyrene resins, vinyl chloride resins, vinyl acetate resins, ABS resins, acrylic resins, acetal resins, polycarbonate resins, polyvinyl alcohol resins, cellulose plastics, aluminum foils, aluminum or the like, and metal oxide vapor deposited layers of silica or alumina.

The thickness of the aluminum foil in a range of 3 to 50 μm is used in many cases from an economic point of view. In addition, since the aluminum foil, the aluminum vapor deposited layer and the alumina vapor deposited layer are dissolved in a basic aqueous solution and released, they function as a release layer and can separate adjacent polyolefin resins.

Specific examples of laminates include, for example, those having the following structures.

(1) a laminate having a polyolefin base material layer and a printing layer in that order, wherein the printing layer is a release layer.
(2) a laminate having a polyolefin base material layer, a primer layer, and a printing layer in that order, wherein the primer layer is a release layer.
(3) a laminate having a first base material layer, a printing layer, an adhesive layer, and a second base material layer in that order, wherein at least one layer of the printing layer and the adhesive layer is a release layer, and a base material in contact with the release layer is a polyolefin base material.
(4) a laminate having a first base material layer, a primer layer, a printing layer, an adhesive layer and a second base material layer in that order, wherein at least one layer of the primer layer and the adhesive layer is a release layer, and a base material in contact with the release layer is a polyolefin base material.
(5) a laminate having a first base material layer, an adhesive layer and a second base material layer in that order, wherein the adhesive layer is a release layer, and at least one base material is a polyolefin base material.
(6) a laminate having a first base material layer, a vapor deposited layer, a printing layer, an adhesive layer and a second base material layer in that order, wherein at least one layer of the vapor deposited layer and the adhesive layer is a release layer, and a base material in contact with the release layer is a polyolefin base material.

Hereinafter, an example of a laminate structure in the embodiment of the present invention will be exemplified but the present invention is not limited thereto. In addition, in the following structure, "base material layer" does not need to be a single layer, and may be a laminate in which a plurality of base materials are laminated.

·polyolefin base material layer/release printing layer
·polyolefin base material layer/release primer layer/printing layer
·polyolefin base material layer/release printing layer/release adhesive layer/polyolefin base material layer
·polyolefin base material layer/release primer layer/printing layer/release adhesive layer/polyolefin base material layer
·base material layer/printing layer/release adhesive layer/polyolefin base material layer
·polyolefin base material layer/release adhesive layer/polyolefin base material layer
·polyolefin base material layer/release primer layer/printing layer/release adhesive layer/vapor deposited layer/polyolefin base material layer

<Method for producing polyolefin base material>

A polyolefin base material can be produced using the above separation and recovery method. The polyolefin base material may be a base material fragmented by crushing, cutting, pulverizing or the like. For example, the method for producing a polyolefin base material includes preparing a laminate having at least a polyolefin base material layer and a release layer in contact with the polyolefin base material layer, wherein the release layer is a layer containing a water-soluble resin or a compound having an acidic group, and recovering a polyolefin base material by the above separation and recovery method.

<Method for producing molding material>

A molding material can be produced by melt-kneading the polyolefin base material recovered by the above separation and recovery method. In the embodiment of the present invention, the method for producing a molding material preferably includes the following Steps 1 to 3. Alternatively, the method for separation and recovery of a laminate or the method for producing a polyolefin base material may include at least the following Step 1, and the method for producing a molding material may include at least the following Step 3. When the molding material contains a masterbatch, the method may further include the following Step 4.

(Step 1) a step in which the laminate is crushed and immersed in a release solution, and a polyolefin base material is released from the laminate or a step in which the laminate is crushed and immersed in a release solution, and a release layer is released from the laminate.

(Step 2) a step in which the polyolefin base material obtained in Step 1 is washed with water.

(Step 3) a step in which the polyolefin base material obtained in Step 2 is melt-kneaded to obtain a recycled resin.

(Step 4) a step in which the recycled resin obtained in Step 3 is mixed with a masterbatch.

The method of crushing the packaging material in Step 1 is not particularly limited, and examples thereof include methods using a jaw crusher, an impact crusher, a cutter mill, a stamp mill, a ring mill, a roller mill, a jet mill, and a hammer mill.

Step 2 may further include, as necessary, a drying step. Through Step 2, a recycled base material (also referred to as a recycled plastic base material) can be obtained.

In the melt-kneading step in Step 3, as necessary, various additives and the like are added, and the mixture is mixed using a Henschel mixer, a tumbler, a disper or the like, and then mixed or dispersed using a kneader, a roll mill, a super mixer, a Henschel mixer, a Schugi mixer, a vertical granulator, a high speed mixer, a far matrix, a ball mill, a steel mill, a sand mill, a vibration mill, an attritor, a batch type kneader such as a Banbury mixer, a twin-screw extruder, a single-screw extruder, a rotor type twin-screw kneader or the like. Thereby, a recycled resin, which is a resin composition, is obtained. The shape of the recycled resin is not particularly limited, and may be a pellet, powder, granule, or bead shape. It is preferable to use a twin-screw extruder in the melt-kneading step.

[Masterbatch]

The molding material in the embodiment of the present invention may further contain a masterbatch. The masterbatch is not particularly limited as long as it has compatibility to the recycled resin, and generally, those obtained by kneading a thermoplastic resin such as a polyethylene resin and a polypropylene resin, and a colorant can be used. The thermoplastic resins contained in the masterbatch may be used alone or two or more thereof may be used in combination.

The masterbatch in the embodiment of the present invention may contain alkali metal, alkaline earth metal, or zinc metal soaps, hydrotalcite, nonionic surfactants, cationic surfactants, anionic surfactants, amphoteric surfactants, antistatic agents, halogen type, phosphorus type or metal oxide flame retardants, lubricants such as ethylene bisalkyl amide, antioxidants, ultraviolet absorbers, and fillers as long as the effects of the present invention are not impaired.

<Method for producing molded article>

A molded article can be obtained by heating and molding the molding material obtained by the above production method. The heat molding method is not particularly limited, and examples thereof include injection molding, extrusion molding, blow molding, and compression molding.

The molding material produced using the polyolefin base material recovered by the separation and recovery method in the embodiment of the present invention has high quality because the printing layer and the adhesive layer are released, and re-adhesion of the released component is additionally prevented, and it can be used in various fields such as home appliances, stationery, automobile parts, toys and sporting goods, and materials for medical use, and building or construction materials.

<Example of embodiment>

Preferable examples of embodiments of the present invention are listed below. The embodiments of the present invention are not limited to the following examples.

[1] A method for separation and recovery of a laminate, including

a step for immersing a laminate having at least a polyolefin base material layer and a release layer in contact with the polyolefin base material layer in a release solution containing a surfactant having an HLB value of 7 or more and a defoamer having an HLB value of 1 to 3, releasing the release layer, and recovering the polyolefin base material,

wherein the release layer is a layer containing a water-soluble resin or a compound having an acidic group.

[2] The method for separation and recovery of a laminate according to [1],

wherein the release layer includes at least one layer selected from the group consisting of a primer layer, a printing layer and an adhesive layer.

[3] The method for separation and recovery of a laminate according to [1] or [2],
wherein the defoamer is at least one selected from the group consisting of an emulsion type silicone compound, a self-emulsion type silicone compound, and a non-silicone compound.

[4] The method for separation and recovery of a laminate according to any one of [1] to [3],
wherein the content of the defoamer based on the mass of the release solution is 0.0001 to 5 mass%.

[5] The method for separation and recovery of a laminate according to any one of [1] to [4],
wherein the release solution is a basic aqueous solution containing a basic compound.

[6] The method for separation and recovery of a laminate according to any one of [1] to [5],
wherein the surfactant includes at least one surfactant selected from the group consisting of an anionic surfactant and a nonionic surfactant.

[7] The method for separation and recovery of a laminate according to [6],
wherein the anionic surfactant includes at least one surfactant selected from the group consisting of a sulfonic acid-based anionic surfactant, a sulfate ester anionic, a carboxylic acid-based anionic surfactant, and a phosphate ester-based anionic surfactant.

[8] The method for separation and recovery of a laminate according to [6],
wherein the nonionic surfactant includes at least one surfactant selected from the group consisting of an alcohol-based nonionic surfactant, a fatty acid-based nonionic surfactant, and a fatty acid-based nonionic surfactant.

[9] The method for separation and recovery of a laminate according to any one of [1] to [8],
wherein the surfactant is an alkylene oxide adduct.

[10] The method for separation and recovery of a laminate according to any one of [1] to [9],
wherein the HLB value of the surfactant is 7 to 20.

[11] The method for separation and recovery of a laminate according to any one of [1] to [10],
wherein the content of the surfactant based on the mass of the release solution is 0.001 to 10 mass%.

[12] A method for producing a molding material, including melt-kneading the polyolefin base material recovered by the method for separation and recovery of a laminate according to any one of [1] to [11].

[13] A method for producing a molded article, including
heat-molding the molding material obtained by the production method according to [12].

[14] A method for producing a polyolefin base material, including:

preparing a laminate having at least a polyolefin base material layer and a release layer in contact with the polyolefin base material layer, and in which the release layer is a layer containing a water-soluble resin or a compound having an acidic group; and
recovering the polyolefin base material by the method for separation and recovery of a laminate according to any one of [1] to [11].

Priority is claimed on Japanese Patent Application No. 2021-189093, filed November 22, 2021, and Japanese Patent Application No. 2022-69564, filed April 20, 2022 the content of which is incorporated herein by reference.

Examples

Hereinafter, the present invention will be described in detail with reference to examples, but the present invention is not limited to the examples. Here, in the present invention, parts and % represent parts by mass and mass% unless otherwise specified.

<Molecular weight and molecular weight distribution>

The weight average molecular weight (Mw), the number average molecular weight (Mn) and the molecular weight distribution (Mw/Mn) were measured through gel permeation chromatography (GPC), and determined as converted molecular weights using polystyrene as a standard substance. The measurement conditions are shown below.

GPC device: Shodex GPC-104 (commercially available from SHOWA DENKO K.K.)
Column: the following columns were connected in series and used.
Shodex LF-404 (commercially available from SHOWA DENKO K.K.) 2 columns
Shodex LF-G (commercially available from SHOWA DENKO K.K.)
Detector: RI (refractive index detector)
Measurement conditions: a column temperature of 40°C
Eluent: tetrahydrofuran

Flow rate: 0.3 mL/min

<Acid value and hydroxyl value>

The acid value and the hydroxyl value were measured according to the method described in JIS K 0070 (1992).

<Production of primer composition and resin for printing ink>

[Synthesis Example 1-1] (polyurethane resin P1)

While introducing nitrogen gas into a reaction container including a reflux cooling pipe, a dropping funnel, a gas introduction pipe, a stirring device, and a thermometer, 152.2 parts of PPA (a polyester polyol composed of a polycondensate of propylene glycol and adipic acid and having a number average molecular weight of 2,000), 15.2 parts of PPG (a polyether polyol composed of polypropylene glycol and having a number average molecular weight of 2,000), 13.6 parts of BD(1,4-butanediol), 99.8 parts of IPDI (isophorone diisocyanate), and 200 parts of NPAC (normal propyl acetate) were put thereinto, and the mixture was reacted at 90°C for 5 hours to obtain a urethane prepolymer solution having an isocyanate group at the terminal.
Next, a mixture containing 19.2 parts of AEA (2-(2-aminoethylamino)ethanol) and 350 parts of IPA (isopropyl alcohol) was added dropwise at room temperature over 60 minutes, and then reacted at 70°C for 3 hours to obtain a polyurethane resin solution.
NPAC was added to the obtained polyurethane resin solution to adjust the solid content, and a solution of a polyurethane resin P1 with a solid content concentration of 30%, a weight average molecular weight of 27,000, an Mw/Mn of 3.1, an acid value of 0.0 mg KOH/g was obtained.

[Synthesis Example 1-2] (polyurethane resin P2)

A solution of a polyurethane resin P2 was obtained in the same manner as in Synthesis Example 1-1 except that raw materials and preparation amounts shown in Table 1 were used.

[Synthesis Example 1-3] (polyurethane resin P3)

While introducing nitrogen gas into a reaction container including a reflux cooling pipe, a dropping funnel, a gas introduction pipe, a stirring device, and a thermometer, 108.6 parts of PPA, 40.7 parts of PEG (a polyether polyol composed of polyethylene glycol and having a number average molecular weight of 2,000), 28.3 parts of DMPA, 105.7 parts of IPDI, and 200 parts of NPAC were put thereinto, and the mixture was reacted at 90°C for 5 hours to obtain a prepolymer solution having an isocyanate group at the terminal.
Next, a mixture containing 16.7 parts of AEA and 150 parts of IPA was added dropwise at room temperature over 60 minutes, and 10.0 parts of 28% ammonia water and 690 parts of deionized water were then gradually added to neutralize the carboxy groups in the resin, thereby making it water-soluble.
Next, NPAC and IPA were distilled off under a reduced pressure to obtain an aqueous solution of a polyurethane resin P3 with a solid content concentration of 30%, a weight average molecular weight of 32,000, an Mw/Mn of 3.3, and an acid value of 39.3 mg KOH/g. However, the acid value in P3 was a value before neutralization.

[Table 1]

Table 1

| | | Parts by mass | | | | | | | | | | | | Resin properties | | | |
| | | urethane reaction | | | | | | urea reaction | | solid content adjustment | | | Sum | Mw | Mw/Mn | acid value mg KOH/g | hydroxyl value mg KOH/g |
| | | polyol | | | | | polyisocyanat e | solv en t | polya min e | solv en t | | | | | | | | |
| | | PP A | PP G | PE G | DM P A | BD | IPDI | NP AC | AEA | IPA | NPA C | wate r | 28%ammonia water | | | | | |
| Synthesi s Example 1-1 | P 1 | 152.2 | 15.2 | | | 13.6 | 99.8 | 200 | 19.2 | 350 | 150 | | | 1,000 | 27,000 | 3.1 | 0.0 | 34.2 |
| Synthesi s Example 1-2 | P 2 | 135.7 | 13.6 | | 28.3 | | 105.7 | 200 | 16.7 | 350 | 150 | | | 1,000 | 30,000 | 3.0 | 39.3 | 30.5 |
| Synthesi s Example 1-3 | P 3 | 108.6 | | 40.7 | 28.3 | | 105.7 | 200 | 16.7 | 150 | | 690.0 | 10.0 | 1,350 | 32,000 | 3.3 | 39.3 | 30.5 |

The abbreviations in Table 1 are shown below.

PPA: a polyester polyol composed of a polycondensate of propylene glycol and adipic acid and having a number average molecular weight of 2,000
PPG: a polyether polyol composed of polypropylene glycol and having a number average molecular weight of 2,000
PEG: a polyether polyol composed of polyethylene glycol and having a number average molecular weight of 2,000
DMPA: 2,2-dimethylolpropanoic acid
BD: 1,4-butanediol
IPDI: isophorone diisocyanate
NPAC: normal propyl acetate
AEA: 2-(2-aminoethylamino)ethanol
IPA: isopropyl alcohol

[Synthesis Example 1-4] (acrylic resin P4)

While introducing nitrogen gas into a reaction container including a reflux cooling pipe, a dropping funnel, a gas introduction pipe, a stirring device, and a thermometer, 70 parts of styrene, 23 parts of acrylic acid, 7 parts of 2-hydroxyethyl methacrylate, 40 parts of EA (ethyl acetate), and 40 parts of IPA were put thereinto, the temperature was raised to 90°C, 1 part of AIBN (azobisisobutyronitrile) and 15 parts of EA were added, a polymerization reaction was performed for 4 hours, 0.1 parts of AIBN and 3 parts of EA were additionally added, and the mixture was reacted for 2 hours to obtain an acrylic resin solution.

EA was added to the obtained acrylic resin solution to adjust the solid content, and a solution of an acrylic resin P4 with a solid content concentration of 30%, a weight average molecular weight of 27,000, an acid value of 179.1 mg KOH/g, and a hydroxyl value of 30.2 mg KOH/g was obtained.

<Composition for forming primer layer (primer composition)>

[Production Example 1-1] (primer composition S1)

87 parts of the polyurethane resin P2 solution, 5 parts of EA, 5 parts of IPA, and 3 parts of silica particles (P-73: hydrophilic silica particles having an average particle size of 3.8 μm, commercially available from Mizusawa Industrial Chemicals, Ltd.) were stirred and mixed using a disper to obtain a primer composition S1.

[Production Examples 1-2 to 1-6] (primer compositions S2 to S6)

Primer compositions S2 to S6 were obtained in the same manner as in Production Example 1-1 except that raw materials and addition ratios shown in Table 2 were changed.

[Table 2]

| Table 2. Primer composition | | | | | | | | | | | | |
|---|---|---|---|---|---|---|---|---|---|---|---|---|
| | | Urethane resin solution | | Acrylic resin solution | Maleated rosin solution | PVA solution | Curing agent solution | Solvent | | | Pigment | Sum |
| | | P2 | P3 | P4 | | | | EA | IPA | water | silica | |
| Production Example 1-1 | S1 | 87 | | | | | | 5 | 5 | | 3 | 100 |
| Production Example 1-2 | S2 | | 87 | | | | | | | 10 | 3 | 100 |
| Production Example 1-3 | S3 | | | 87 | | | | 5 | 5 | | 3 | 100 |

(continued)

| Table 2. Primer composition | | | | | | | | | | | |
|---|---|---|---|---|---|---|---|---|---|---|---|
| | | Urethane resin solution | Acrylic resin solution | Maleated rosin solution | PVA solution | Curing agent solution | Solvent | | | Pigment | Sum |
| | | P2 | P3 | P4 | | | | EA | IPA | water | silica | |
| Production Example 1-4 | S4 | | | | 87 | | | 5 | 5 | | 3 | 100 |
| Production Example 1-5 | S5 | | | | | 87 | | | | 10 | 3 | 100 |
| Production Example 1-6 | S6 | 84 | | | | | 3 | 5 | 5 | | 3 | 100 |

The abbreviations in Table 2 are shown below.

maleated rosin solution: a solution obtained by diluting Malkyd No. 32 (a product with an acid value of 130 mg KOH/g and a solid content concentration of 100%, commercially available from Arakawa Chemical Industries, Ltd.) with ethyl acetate to a solid content concentration of 30%
PVA solution: an aqueous solution of Kuraray Poval 5-88 (a saponification degree of 86.5 to 89.0%, commercially available from Kuraray Co., Ltd.) with a solid content concentration of 15%
curing agent solution: a solution obtained by diluting HDI-TMP adduct (DURANATE P301-75E, a solid content concentration of 75%, commercially available from Asahi Kasei Corporation) with ethyl acetate to a solid content concentration 50%
EA: ethyl acetate
IPA: isopropyl alcohol

<Production of printing ink>

[Production Example 2-1] (printing ink R1)

10 parts of indigo blue pigment P. B. 15 (C. I. Pigment Blue 15), 0.2 parts of Synergist 2100 (BYK-SYNERGIST 2100, commercially available from BYK Japan), 0.5 parts of BYK-142 (DISPERBYK-142, commercially available from BYK Japan), 24.3 parts of the polyurethane resin P1 solution, 5 parts of PVC (vinyl chloride-vinyl acetate copolymer resin (SOLBIN TAO, a solid content of 30%, EA solution, commercially available from Nissin Chemical Co., Ltd.)), 10 parts of EA, and 10 parts of IPA were mixed and stirred, and a dispersion treatment was performed using a sand mill as a bead mill for 20 minutes. Then, 20 parts of the polyurethane resin P1 solution, 10 parts of EA, and 10 parts of IPA were mixed and stirred to obtain a printing ink R1. Table 3 shows total amounts added during dispersion and during post addition.

[Production Examples 2-2 to 2-4] (printing inks R2 to R4)

Printing inks R2 to R4 were obtained in the same manner as in Ink Production Example 2-1 except that raw materials and addition ratios shown in Table 3 were used. The addition amount in Table 3 is the sum of the amount added during dispersion and the amount during post-addition. In Production Examples 2-3 and 2-4, the amount of the resin solution during dispersion was 29.3 parts, and the amount of the resin solution during post addition was 20 parts.

[Table 3]

| Table 3. Printing ink | | Pigment | Dispersant | | Binder resin | | | | Solvent | | Sum |
|---|---|---|---|---|---|---|---|---|---|---|---|
| | | indigo blue | Synergist 2100 | BYK-142 | urethane resin solution | | acrylic resin solution | maleated rosin solution | PVC solution | EA | IPA | |
| | | P. B. 15 | | | P1 | P2 | P4 | | | | | |
| Production Example 2-1 | R1 | 10 | 0.2 | 0.5 | 44.3 | | | | 5 | 20 | 20 | 100 |
| Production Example 2-2 | R2 | 10 | 0.2 | 0.5 | | 44.3 | | | 5 | 20 | 20 | 100 |
| Production Example 2-3 | R3 | 10 | 0.2 | 0.5 | | | 49.3 | | | 20 | 20 | 100 |
| Production Example 2-4 | R4 | 10 | 0.2 | 0.5 | | | | 49.3 | | 20 | 20 | 100 |

The abbreviations in Table 3 are shown below.

P. B. 15: C. I. Pigment Blue 15
Synergist 2100: BYK-SYNERGIST 2100 (commercially available from BYK Japan) BYK-142: DISPERBYK-142 (commercially available from BYK Japan)
maleated rosin solution: a solution obtained by diluting Malkyd No. 32 (a product with an acid value of 130 mg KOH/g and a solid content concentration of 100%, commercially available from Arakawa Chemical Industries, Ltd.) with ethyl acetate to a solid content concentration of 30%
PVC solution: vinyl chloride-vinyl acetate copolymer resin (SOLBIN TAO, a solid content of 30%, EA solution, commercially available from Nissin Chemical Co., Ltd.) EA: ethyl acetate
IPA: isopropyl alcohol

<Production of polyol used in adhesive>

[Synthesis Example 2-1] (polyester polyol B1)

124 parts of ethylene glycol, 212 parts of neopentyl glycol, 368 parts of 1,6-hexanediol, 645 parts of isophthalic acid, 36 parts of adipic acid, and 265 parts of sebacic acid were put into reaction container including a stirrer, a thermometer, a reflux cooling pipe, a dropping tank and a nitrogen gas introduce pipe, the temperature was heated to 250°C while stirring under a nitrogen stream, and an esterification reaction was performed. After a predetermined amount of water was distilled off and the reaction was continued until the acid value reached 5 or less, the pressure was gradually reduced, and a deglycol reaction was performed at 1 mmHg or less for 5 hours to obtain a polyester polyol. Then, 35 parts of isophorone diisocyanate was gradually added and reacted at 150°C for about 2 hours to obtain a polyesterpolyurethane polyol. 12.0 parts of ethylene glycol bisanhydrotrimellitate was added to 100 parts of the polyesterpolyurethane polyol, and reacted at 180°C for about 2 hours, and then diluted with ethyl acetate until the solid content concentration reached 50%, and thereby a solution of a partially acid-modified polyester polyol B1 having a number average molecular weight of 9,000 and an acid value of 30.3 mg KOH/g was obtained.

[Synthesis Example 2-2] (polyester polyol B2)

58 parts of ethylene glycol, 412 parts of diethylene glycol, 343 parts of neopentyl glycol, 517 parts of isophthalic acid, and 393 parts of adipic acid were put into a reaction container including a stirrer, a thermometer, a reflux cooling pipe, a dropping tank and a nitrogen gas introduce pipe, the temperature was raised to 250°C while stirring under a nitrogen stream, and an esterification reaction was performed. After a predetermined amount of water was distilled off and the reaction was continued until the acid value reached 5 or less, the pressure was gradually reduced, and a deglycol reaction was performed at 1 mmHg or less for 5 hours to obtain a polyester polyol. 4.0 parts of trimellitic anhydride was added to 100 parts of the polyester polyol and reacted at 180°C for about 2 hours, and then diluted with ethyl acetate until the solid content concentration reached 50%, and thereby a solution of a partially acid-modified polyester polyol B2 having a number average molecular weight of 2,000 and an acid value of 23.5 mg KOH/g was obtained.

[Synthesis Example 2-3] (polyester polyol B3)

188 parts of ethylene glycol, 316 parts of neopentyl glycol, 179 parts of 1,6-hexanediol, 315 parts of terephthalic acid, 315 parts of isophthalic acid, 64 parts of adipic acid, and 323 parts of sebacic acid were put into a reaction container including a stirrer, a thermometer, a reflux cooling pipe, a dropping tank and a nitrogen gas introduce pipe, the temperature was heated to 250°C while stirring under a nitrogen stream, and an esterification reaction was performed. After a predetermined amount of water was distilled off and the reaction was continued until the acid value reached 5 or less, the pressure was gradually reduced, and a deglycol reaction was performed at 1 mmHg or less for 5 hours to obtain a polyester polyol. Then, 8.5 parts of isophorone diisocyanate was gradually added and reacted at 150°C for about 2 hours, and then diluted with ethyl acetate until the solid content concentration reached 50%, and thereby a solution of a partially acid-modified polyester polyol B3 having a number average molecular weight of 7,500 and an acid value of 0 mg KOH/g was obtained.

<Preparation of polyisocyanate solution>

[Preparation Example 1] (polyisocyanate C1)

Coronate 2785 (a biuret type polyisocyanate derived from hexamethylene diisocyanate, commercially available from Tosoh Corporation) was diluted with ethyl acetate to adjust the solid content concentration to 50% and the NCO% to 9.6%, and thereby a solution of a polyisocyanate C1 was obtained.

[Preparation Example 2] (polyisocyanate C2)

Takenate D-110NB (trimethylolpropane adduct type polyisocyanate derived from xylylene diisocyanate (hereinafter referred to as XDI), commercially available from Mitsui Chemicals, Inc.) was diluted with ethyl acetate to adjust the solid content concentration to 50%, and the NCO% to 7.9%, and thereby a solution of a polyisocyanate C2 was obtained.

<Production of adhesive>

[Production Example 3-1] (adhesive D1)

90 parts of the polyester polyol B1 solution, 10 parts of the polyester polyol B2 solution, and 8 parts of the polyisocyanate C1 solution were added and EA was added to prepare an adhesive solution having a solid content concentration of 30%.

[Production Examples 3-2 to 3-4] (adhesives D2 to D4)

Solutions of adhesives D2 to D4 were obtained in the same manner as in Production Example 3-1 except that raw materials and addition formulations were changed as shown in Table 4.

[Table 4]

| Table 4. Adhesive | | Polyester polyol solution | | | Polyisocyanate solution | | Maleated rosin solution |
|---|---|---|---|---|---|---|---|
| | | | | | aliphatic | aromatic and aliphatic | |
| | | | | | HDI derivative | XDI derivative | |
| | | B1 | B2 | B3 | C1 | C2 | |
| Production Example 3-1 | D1 | 90 | 10 | | 8 | | |

(continued)

| Table 4. Adhesive | | | | | | | |
|---|---|---|---|---|---|---|---|
| | | Polyester polyol solution | | | Polyisocyanate solution | | Maleated rosin solution |
| | | | | | aliphatic | aromatic and aliphatic | |
| | | | | | HDI derivative | XDI derivative | |
| | | B1 | B2 | B3 | C1 | C2 | |
| Production Example 3-2 | D2 | 90 | 10 | | | 8 | |
| Production Example 3-3 | D3 | | | 100 | 8 | | 9 |
| Production Example 3-4 | D4 | | | 100 | 8 | | |

The abbreviations in Table 4 are shown below.
maleated rosin solution: a solution obtained by diluting Malkyd No. 32 (a product with an acid value of 130 mg KOH/g and a solid content concentration of 100%, commercially available from Arakawa Chemical Industries, Ltd.) with ethyl acetate to a solid content concentration of 30%

<Production of laminate>

Hereinafter, a method for producing a laminate will be described. Here, each of a primer composition and a printing ink was used after being diluted using a mixed solvent containing EA/IPA (a mass ratio of 70/30) to a viscosity of 15 seconds (25°C, Zahn cup #3 (commercially available from Rigo Co., Ltd.)). In addition, the thickness of each of the primer layer and the printing layer was adjusted to about 1.5 $\mu$m.

[Production Example 4-1] (laminate L1)

The diluted primer composition S1 and printing ink R1 were printed in that order on the OPP (corona treated stretched polypropylene film, a thickness of 20 $\mu$m) using a gravure printing machine including a gravure plate with a plate depth of 30 $\mu$m and dried at 50°C, and thereby a laminate L1 having a structure of polyolefin base material layer (OPP)/release primer layer (S1)/printing layer (R1) was obtained.

[Production Examples 4-2 to 4-7] (laminates L2 to L7)

Laminates L2 to L7 were obtained in the same manner as in Production Example 4-1 except that base materials and primer compositions were changed to those listed in Table 5.

[Production Example 4-8] (laminate L8)

The diluted printing ink R2 was printed on the OPP using a gravure printing machine including a gravure plate with a plate depth of 30 $\mu$m and dried at 50°C, and thereby a laminate L8 having a structure of polyolefin base material layer (OPP)/release printing layer (R2) was obtained.

[Production Examples 4-9 to 4-11 and Comparative Production Example 4-2] (laminates L9 to L11 and LL2)

Laminates L9 to L11 and LL2 were obtained in the same manner as in Production Example 4-8 except that base materials and printing inks were changes to those listed in Table 5.

[Production Example 4-12] (laminate L12)

The adhesive D1 was applied onto the OPP and dried using a dry laminating machine so that the coating amount after drying was 2 g/m$^2$ and then bonded with the CPP (unstretched polypropylene film with a thickness of 50 $\mu$m), and thereby a laminate having a structure of CPP/D1/OPP was obtained.
Next, the diluted primer composition S1 and printing ink R1 were printed in that order on the OPP of the obtained laminate using a gravure printing machine including a gravure plate with a plate depth of 30 $\mu$m and dried at 50°C, and thereby a laminate L12 having a structure of polyolefin base material layer (CPP)/release adhesive layer (D1)/polyolefin base material layer (OPP)/release primer layer (S1)/printing layer (R1) was obtained.

[Production Example 4-13] (laminate L13)

The adhesive D1 was applied onto the OPP and dried using a dry laminating machine so that the coating amount after drying was 2 g/m$^2$ and then bonded with the CPP, and thereby a laminate having a structure of CPP/D1/OPP was obtained.
Next, the diluted printing ink R2 was printed on the OPP of the obtained laminate using a gravure printing machine including a gravure plate with a plate depth of 30 $\mu$m and dried at 50°C, and thereby a laminate L13 having a structure of polyolefin base material layer (CPP)/release adhesive layer (D1)/polyolefin base material layer (OPP)/printing layer (R2) was obtained.

[Production Example 4-14] (laminate L14)

The diluted primer composition S1 and printing ink R1 were printed in that order on the OPP using a gravure printing machine including a gravure plate with a plate depth of 30 $\mu$m and dried at 50°C, and thereby a laminate having a structure of OPP/S1/R1 was obtained.
Next, the adhesive D1 was applied onto the printing layer of the obtained laminate and dried using a dry laminating machine so that the coating amount after drying was 2 g/m$^2$ and then bonded with the CPP, and thereby a laminate L14 having a structure of polyolefin base material layer (OPP)/release primer layer (S1)/printing layer (R1)/release adhesive layer (D1)/polyolefin base material layer (CPP) was obtained.

[Production Examples 4-15 to 4-22] (laminates L15 to L22)

Laminates L15 to L22 were obtained in the same manner as in Production Example 4-14 except that base materials, primer compositions and adhesives were changes to those listed in Table 5.

[Production Example 4-23] (laminate L23)

The diluted printing ink R2 was printed on the OPP using a gravure printing machine including a gravure plate with a plate depth of 30 $\mu$m and dried at 50°C, and thereby a laminate having a structure of OPP/R2 was obtained.
Next, the adhesive D1 was applied onto the printing layer of the obtained laminate and dried using a dry laminating machine so that the coating amount after drying was 2 g/m$^2$ and then bonded with the CPP, and thereby a laminate L25 having a structure of polyolefin base material layer (OPP)/release printing layer (R2)/release adhesive layer (D1)/polyolefin base material layer (CPP) was obtained.

[Production Examples 4-24 to 4-28 and Comparative Production Example 4-3] (laminates L24 to L28 and LL3)

Laminates L24 to 28 and LL3 were obtained in the same manner as in Production Example 4-23 except that base materials, diluted printing inks and adhesives were changes to those listed in Table 5.

[Production Example 4-29] (laminate L29)

The adhesive D1 was applied onto the OPP and dried using a dry laminating machine so that the coating amount after drying was 2 g/m$^2$ and then bonded with the CPP, and thereby a laminate L29 having a structure of polyolefin base material layer (OPP)/release adhesive layer (D1)/polyolefin base material layer (CPP) was obtained.

[Production Examples 4-30 to 4-31] (laminates L30 to L31)

Laminates L30 to L31 were obtained in the same manner as in Production Example 4-29 except that adhesives were changes to those listed in Table 5.

[Production Example 4-32] (laminate L32)

The adhesive D4 was applied onto the PET (polyethylene terephthalate film with a thickness of 12 $\mu$m) and dried using a dry laminating machine so that the coating amount after drying was 2 g/m$^2$ and then bonded with NY (nylon film with a thickness of 15 $\mu$m). In addition, the adhesive D1 was applied onto the NY and dried using a dry laminating machine so that the coating amount after drying was 2 g/m$^2$ and then bonded with the CPP, and thereby a laminate L32 having a structure of base material layer (PET)/adhesive layer (D4)/base material layer (NY)/release adhesive layer (D1)/polyolefin base material layer (CPP) was obtained.

[Production Example 4-33] (laminate L33)

The diluted printing ink R1 was printed in that order on the PET using a gravure printing machine including a gravure plate with a plate depth of 30 $\mu$m and dried at 50°C, and thereby a laminate having a structure of PET/R1 was obtained.

Next, the adhesive D4 was applied onto the printing layer of the obtained laminate and dried using a dry laminating machine so that the coating amount after drying was 2 g/m$^2$ and then bonded with the NY. In addition, the adhesive D1 was applied onto the NY and dried using a dry laminating machine so that the coating amount after drying was 2 g/m$^2$ and then bonded with the CPP, and thereby a laminate L33 having a structure of base material layer (PET)/printing layer (R1)/adhesive layer (D4)/base material layer (NY)/release adhesive layer (D1)/polyolefin base material layer (CPP) was obtained.

[Production Example 4-34] (laminate L34)

The adhesive D4 was applied onto the PET and dried using a dry laminating machine so that the coating amount after drying was 2 g/m$^2$ and then bonded with the NY. In addition, the adhesive D1 was applied onto the NY and dried using a dry laminating machine so that the coating amount after drying was 2 g/m$^2$ and then bonded with the CPP, and thereby a laminate having a structure of PET/D4/NY/D1/CPP was obtained.

Next, the diluted primer composition S1 and printing ink R1 were printed in that order on the PET of the obtained laminate using a gravure printing machine including a gravure plate with a plate depth of 30 $\mu$m and dried at 50°C, and thereby a laminate L34 having a structure of printing layer (R1)/release primer layer (S1)/base material layer (PET)/adhesive layer (D4)/base material layer (NY)/release adhesive layer (D1)/polyolefin base material layer (CPP) was obtained.

[Comparative Production Example 4-1] (laminate LL1)

The primer composition S1 and the printing ink R1 were printed in that order on the PET using a gravure printing machine including a gravure plate with a plate depth of 30 $\mu$m and dried at 50°C, and thereby a laminate LL1 having a structure of base material layer (PET)/release primer layer (S1)/printing layer (R1) was obtained.

[Table 5]

| | | Structure | Recovered base material layer | Release layer |
|---|---|---|---|---|
| Production Example 4-1 | L1 | OPP/S1/R1 | OPP | S1 |
| Production Example 4-2 | L2 | OPP/S2/R1 | OPP | S2 |
| Production Example 4-3 | L3 | OPP/S3/R1 | OPP | S3 |
| Production Example 4-4 | L4 | OPP/S4/R1 | OPP | S4 |
| Production Example 4-5 | L5 | OPP/S5/R1 | OPP | S5 |
| Production Example 4-6 | L6 | OPP/S6/R1 | OPP | S6 |
| Production Example 4-7 | L7 | PE/S1/R1 | PE | S1 |
| Production Example 4-8 | L8 | OPP/R2 | OPP | R2 |
| Production Example 4-9 | L9 | OPP/R3 | OPP | R3 |
| Production Example 4-10 | L10 | OPP/R4 | OPP | R4 |
| Production Example 4-11 | L11 | PE/R2 | PE | R2 |
| Production Example 4-12 | L12 | CPP/D1/OPP/S1/R1 | CPP, OPP | D1, S1 |
| Production Example 4-13 | L13 | CPP/D1/OPP/R2 | CPP, OPP | D1, R2 |
| Production Example 4-14 | L14 | OPP/S1/R1/D1/CPP | OPP, CPP | S1, D1 |
| Production Example 4-15 | L15 | OPP/S2/R1/D1/CPP | OPP, CPP | S2, D1 |

(continued)

|  |  | Structure | Recovered base material layer | Release layer |
|---|---|---|---|---|
| Production Example 4-16 | L16 | OPP/S3/R1/D1/CPP | OPP, CPP | S3, D1 |
| Production Example 4-17 | L17 | OPP/S4/R1/D1/CPP | OPP, CPP | S4, D1 |
| Production Example 4-18 | L18 | OPP/S5/R1/D1/CPP | OPP, CPP | S5, D1 |
| Production Example 4-19 | L19 | OPP/S6/R1/D1/CPP | OPP, CPP | S6, D1 |
| Production Example 4-20 | L20 | OPP/S1/R1/D2/CPP | OPP, CPP | S1, D2 |
| Production Example 4-21 | L21 | OPP/S1/R1/D3/CPP | OPP, CPP | S1, D3 |
| Production Example 4-22 | L22 | PE/S1/R1/D1/CPP | PE, CPP | S1, D1 |
| Production Example 4-23 | L23 | OPP/R2/D1/CPP | OPP, CPP | R2, D1 |
| Production Example 4-24 | L24 | OPP/R3/D1/CPP | OPP, CPP | R3, D1 |
| Production Example 4-25 | L25 | OPP/R4/D1/CPP | OPP, CPP | R4, D1 |
| Production Example 4-26 | L26 | OPP/R2/D2/CPP | OPP, CPP | R2, D2 |
| Production Example 4-27 | L27 | OPP/R2/D3/CPP | OPP, CPP | R2, D3 |
| Production Example 4-28 | L28 | PE/R2/D1/CPP | PE, CPP | R2, D1 |
| Production Example 4-29 | L29 | OPP/D1/CPP | OPP, CPP | D1 |
| Production Example 4-30 | L30 | OPP/D2/CPP | OPP, CPP | D2 |
| Production Example 4-31 | L31 | OPP/D3/CPP | OPP, CPP | D3 |
| Production Example 4-32 | L32 | PET/D4/NY/D1/CPP | CPP | D1 |
| Production Example 4-33 | L33 | PET/R1/D4/NY/D1/CPP | CPP | D1 |
| Production Example 4-34 | L34 | R1/S1/PET/D4/NY/D 1/CPP | CPP | S1, D1 |
| Comparative Production Example 4-1 | LL1 | PET/S1/R1 | PET | S1 |
| Comparative Production Example 4-2 | LL2 | OPP/R1 | - | - |
| Comparative Production Example 4-3 | LL3 | OPP/R1/D4/CPP | - | - |

The abbreviations in Table 5 are shown below.

OPP: corona treated stretched polypropylene film, a thickness of 20 $\mu$m
PE: linear low density polyethylene film, a thickness of 50 $\mu$m
CPP: unstretched polypropylene film, a thickness of 50 $\mu$m
PET: polyethylene terephthalate film, a thickness of 12 $\mu$m
NY: nylon film, a thickness of 15 $\mu$m

<Production of deinking treatment solution (release solution)>

[Production Example 5-1] (treatment solution A1)

1 part of POE alkyl ether A (polyoxyethylene lauryl ether, POE addition number; 4, HLB; 9.7) as a surfactant, 0.1 parts of BYK-1650 (silicone-based emulsion type defoamer, a solid content concentration of 27.5%, commercially available from BYK Japan,) as a defoamer, 2 parts of sodium hydroxide, and 96.9 parts of water were added and stirred using a disper to obtain a treatment solution A1.

[Production Examples 5-2 to 5-26 and Comparative Production Examples 5-1 to 5-5] (treatment solutions A2 to A26, and AA1 to AA5)

Treatment solutions A2 to A26, and AA1 to AA5 were obtained in the same manner as in Production Example 5-1 except that addition formulations were changed as shown in Table 6.

[Table 6]

Table 6

| Raw material | | Surfactant | | | | | | | | | Defoamer | | | | | | | | Basic compound | | Solvent | Sum |
|---|---|---|---|---|---|---|---|---|---|---|---|---|---|---|---|---|---|---|---|---|---|---|
| | | nonionic | | | | | | anionic | | | silicone-based | | | | | non-silicone-based | | | sodium hydroxide | potassium hydroxide | water | |
| | | POE alkyl ether | | | | POE acetylene diol | | sodium lauryl sulfate | POE alkyl ether phosphate | | oil compound type | oil type | emulsion type | | self-emulsion type | | | | | | | |
| | | A | B | C | D | A | B | | A | B | BYK-018 | BYK-1770 | BYK-1650 | KM-89 | KS-540 | BYK-015 | BYK-1640 | Sorgen 30 | | | | |
| HLB | | 9.7 | 15.3 | 13.9 | 13.6 | 4.0 | 17.0 | >20 | 13.3 | 10.0 | | | | | | | | | | | | |
| Production Example 5-1 | A1 | 1 | | | | | | | | | | | 0.1 | | | | | | 2 | | 96.9 | 100 |
| Production Example 5-2 | A2 | | 1 | | | | | | | | | | 0.1 | | | | | | 2 | | 96.9 | 100 |

31

| | | | | | | | | | | | | | | | | |
|---|---|---|---|---|---|---|---|---|---|---|---|---|---|---|---|---|
| Production Example 5-3 | A3 | 100 | 96.9 | | 2 | | | | 0.1 | | | | | | | 1 |
| Production Example 5-4 | A4 | 100 | 96.9 | | 2 | | | | 0.1 | | | | | | 1 | |
| Production Example 5-5 | A5 | 100 | 96.9 | | 2 | | | | 0.1 | | | | | 1 | | |
| Production Example 5-6 | A6 | 100 | 96.9 | | 2 | | | | 0.1 | | | | 1 | | | |
| Production Example 5-7 | A7 | 100 | 96.9 | | 2 | | | | 0.1 | | | 1 | | | | |
| Production Example 5-8 | A8 | 100 | 96.9 | | 2 | | | | 0.1 | | 1 | | | | | |

| | | | | | | | | | | |
|---|---|---|---|---|---|---|---|---|---|---|
| Production Example 5-9 | A9 | 1 | 0.1 | | | | | 2 | 96.9 | 100 |
| Production Example 5-10 | A10 | 1 | | 0.1 | | | | 2 | 96.9 | 100 |
| Production Example 5-11 | A11 | 1 | | | 0.1 | | | 3 | 95.9 | 100 |
| Production Example 5-12 | A12 | 1 | | | | 0.1 | | 4 | 94.9 | 100 |
| Production Example 5-13 | A13 | 1 | | | | | 0.1 | 2 | 96.9 | 100 |

| Production Example | | | | | | | | |
|---|---|---|---|---|---|---|---|---|
| Production Example 5-14 | Al 4 | | 1 | | 0.1 | 2 | 96.9 | 100 |
| Production Example 5-15 | Al 5 | 1 | | 0.01 | | 2 | 96.99 | 100 |
| Production Example 5-16 | Al 6 | | 5 | 5 | | 2 | 88 | 100 |
| Production Example 5-17 | Al 7 | | 0.1 | 0.1 | | 2 | 97.8 | 100 |
| Production Example 5-18 | Al 8 | 5 | | 0.1 | | 2 | 92.9 | 100 |

EP 4 438 634 A1

| | | | | | | | | | | | | | | | | | | | | | |
|---|---|---|---|---|---|---|---|---|---|---|---|---|---|---|---|---|---|---|---|---|---|
| Production Example 5-19 | A19 | 10 | | | | | | | | 0.1 | | | | | | 2 | | 87.9 | 100 |
| Production Example 5-20 | A20 | | | 1 | | | | | | 0.1 | | | | | | 0.5 | | 98.4 | 100 |
| Production Example 5-21 | A21 | | | 1 | | | | | | 0.1 | | | | | | 5 | | 93.9 | 100 |
| Production Example 5-22 | A22 | | | 1 | | | | | | 0.1 | | | | | | 10 | | 88.9 | 100 |
| Production Example 5-23 | A23 | | | 1 | | | | | | 0.1 | | | | | | | 2 | 96.9 | 100 |

35

| | | | | | | | | | | | | | | | |
|---|---|---|---|---|---|---|---|---|---|---|---|---|---|---|---|
| Production Example 5-24 | A24 | | 1 | | | | | | 0.1 | | | | | 98.9 | 100 |
| Production Example 5-25 | A25 | 0.01 | | | | | | | 0.001 | | | 2 | | 97.989 | 100 |
| Production Example 5-26 | A26 | 0.001 | | | | | | | 0.001 | | | 2 | | 97.998 | 100 |
| Comparative Production Example 5-1 | AA1 | | | | | | 0.1 | | | | | 2 | | 97.9 | 100 |

36

| | | | | | | | | | | | | | | | | | | |
|---|---|---|---|---|---|---|---|---|---|---|---|---|---|---|---|---|---|---|
| Comparative Production Example 5-2 | AA2 | | | | 1 | | | 0.1 | | | | | | | 2 | 96.9 | 100 |
| Comparative Production Example 5-3 | AA3 | | | | | | 1 | | | | | | | | 2 | 97 | 100 |
| Comparative Production Example 5-4 | AA4 | 1 | | | | | | | | | | | | | 2 | 97 | 100 |
| Comparative Production Example 5-5 | AA5 | | 1 | | | | | | | | | | 0.1 | | 2 | 96.9 | 100 |

The abbreviations in Table 6 are shown below.

(Nonionic surfactant)

POE alkyl ether A: polyoxyethylene (POE) lauryl ether, POE addition number; 4, HLB; 9.7
POE alkyl ether B: POE lauryl ether, POE addition number; 12, HLB; 15.3
POE alkyl ether C: POE stearyl ether, POE addition number; 12, HLB; 13.9
POE alkyl ether D: POE oleyl ether, POE addition number; 13, HLB; 13.6

(Nonionic surfactant)

POE acetylene diol A: POE addition number; 1.3, HLB; 4.0
POE acetylene diol B: POE addition number; 30, HLB; 17

(Anionic surfactant)

sodium lauryl sulfate: HLB;>20 (more than 20)
POE alkyl ether phosphate A: POE alkyl ether phosphate, alkyl carbon number; 12 to 15, POE addition number; 4, HLB; 13.3
POE alkyl ether phosphate B: POE lauryl ether phosphate, POE addition number; 4, HLB; 10.0

(Defoamer)

BYK-018: commercially available from BYK Japan, silicone-based oil compound type, solid content concentration>97% (more than 97%)
BYK-1770: commercially available from BYK Japan, silicone-based oil type, solid content concentration>96% (more than 96%)
BYK-1650: commercially available from BYK Japan, silicone-based emulsion type, a solid content concentration of 27.5%, main solvent; water
KM-89: commercially available from Shin-Etsu Chemical Co., Ltd., silicone-based emulsion type, a solid content concentration of 34%, main solvent; water
KS-540: commercially available from Shin-Etsu Chemical Co., Ltd., silicone-based self-emulsion type, a solid content concentration of 100%,
BYK-015: commercially available from BYK Japan, solid content concentration>97% (more than 97%)
BYK-1640: commercially available from BYK Japan, non-silicone-based, solid content concentration of 62%, main solvent; water
Sorgen 30: commercially available from DKS Co., Ltd., non-silicone-based, solid content concentration of 100%, HLB value: 3.7

Defoamers other than Sorgen 30 had an HLB value of 1 to 3.

<Separation and recovery of laminate (deinking test)>

[Example 1-1]

400 g of the treatment solution A1 and 12 g of a sample obtained by cutting the packaging material L1 into a size of 1 cm×1 cm were put into a 1,000 mL stainless steel beaker, and stirred under conditions of 70°C and 2,000 rpm. The separation and recovery state of the laminate was subjected to the following evaluation.

[Examples 1-2 to 1-93 and Comparative Examples 1 to 18]

In addition, the separation and recovery state of the laminate was evaluated in the same manner as in Example 1-1 except that materials shown in Tables 7-1 to 7-4 were used.

The results are shown in Tables 7-1 to 7-6 (hereinafter referred to as Table 7).

<Evaluation of laminate>

(Defoaming properties)

10 minutes after stirring was started, stirring was temporarily suspended, the height of the liquid level (above the bubbles) was visually observed, and evaluated based on the following criteria. The height of 450 mL refers to the capacity scale written on the beaker, and a larger numerical value indicates a higher liquid level, that is, more bubbles are generated.

A (excellent): the height of the liquid level (above the bubbles) during stirring was less than 500 mL
B (good): the height of the liquid level (above the bubbles) during stirring was 500 mL or more and less than 700 mL
C (acceptable): the height of the liquid level (above the bubbles) during stirring was 700 mL or more and less than 900 mL
D (unacceptable): the height of the liquid level (above the bubbles) during stirring was 900 mL or more

(Base material separability)

For the laminates having adhesive layers using the adhesives D1 to D3 having releasability, when 15 minutes, 30 minutes, and 1 hour had elapsed after stirring was started, the base materials were sampled, washed with water, and dried. 30 sheets were randomly selected from the obtained base materials, and the thickness of the base material was measured. Based on the thickness of the base material, it was determined whether the laminate was separated between the adhesive layers using the adhesives D1 to D3, and evaluation was performed based on the following criteria.

A (excellent): 15 minutes after stirring was started, all 30 sheets were separated base materials.
B (good): 30 minutes after stirring was started, all 30 sheets were separated base materials.
C (acceptable): 1 hour after stirring was started, all 30 sheets were separated base materials.
D (unacceptable): 1 hour after stirring was started, the base material before separation was mixed.

(Releasability of printing layer)

For the laminate having a release primer layer and/or release printing layer on a polyolefin base material, and the laminate LL1, when 15 minutes, 30 minutes, and 1 hour had elapsed after stirring was started, the base materials were sampled, washed with water, and dried. From the obtained base materials, 10 polyolefin base material sheets printed with a release primer layer and/or release printing layer after separation were sampled, the removal rate of the printing layer was visually confirmed and evaluated based on the following criteria. For the laminate LL1, the PET base material was recovered and evaluated.

A (excellent): 90% or more of the printing layer was detached from the base material 15 minutes after stirring was started.
B (good): 90% or more of the printing layer was detached from the base material 30 minutes after stirring was started.
C (acceptable): 90% or more of the printing layer was detached from the base material 1 hour after stirring was started.
D (unacceptable): 90% or more of the printing layer was not detached from the base material 1 hour after stirring was started.

(Releasability of adhesive)

For the laminates having adhesive layers using the adhesives D1 to D3 having releasability, when 15 minutes, 30 minutes, and 1 hour had elapsed after stirring was started, the base materials were sampled, washed with water, and dried. From the obtained base materials, 10 sealant base material sheets after separation were sampled, the presence of absorption peaks of the adhesive was confirmed using FT-IR at a total of 30 locations, with 3 locations on the front and back sides of each sealant base material, and evaluation was performed based on the following criteria.

A (excellent): absorption peaks of the adhesive were not confirmed at 25 or more of 30 locations on the base material 15 minutes after stirring was started.

B (good): absorption peaks of the adhesive were not confirmed at 25 or more of 30 locations on the base material 30 minutes after stirring was started.

C (acceptable): absorption peaks of the adhesive were not confirmed at 25 or more of 30 locations on the base material 1 hour after stirring was started.

D (unacceptable): absorption peaks of the adhesive were confirmed at 6 or more of 30 locations on the base material 1 hour after stirring was started.

(Re-adhesion prevention property of printing layer)

In the releasability evaluation of the printing layer, after stirring was additionally performed for 1 hour from when it was confirmed that 90% or more of the printing layer was released from the base material, the released base material was recovered, washed with water, and dried. From the obtained base materials, 10 polyolefin base material sheets printed with a release primer layer and/or release printing layer after separation were sampled, the obtained 10 base material sheets were superimposed and the color value $L^*_x$, $a^*_x$, $b^*_x$ was measured using a spectral colorimeter (X-rite eXact commercially available from X-rite Inc.).

On the other hand, when it was confirmed that 90% or more of the printing layer was released from the base material, similarly, the released base material was recovered, the 10 base material sheets were superimposed, and the color value $L^*_y$, $a^*_y$, $b^*_y$ was measured.

The color difference $\Delta E$ before and after stirring for 1 hour was determined by the following formula, and the re-adhesion prevention property was evaluated based on the following criteria.

$$(\text{Formula}) \ \Delta E = ((L^*_x - L^*_y)^2 + (a^*_x - a^*_y)^2 + (b^*_x - b^*_y)^2)^{1/2}$$

A (excellent): $\Delta E$ was less than 3

B (good): $\Delta E$ was 3 or more and less than 10

C (acceptable): $\Delta E$ was 10 or more and less than 20

D (unacceptable): other than A to C

(Re-adhesion prevention property of adhesive layer)

In the releasability evaluation of the adhesive layer, after stirring was additionally performed for 1 hour from when absorption peaks of the adhesive were not confirmed at 25 or more of 30 locations, the released base material was recovered, washed with water, and dried. From the obtained base materials, 10 sealant base material sheets after separation were sampled, the presence of absorption peaks of the adhesive was confirmed using FT-IR at a total of 30 locations, with 3 locations on the front and back sides of each sealant base material.

A (excellent): absorption peaks of the adhesive were confirmed at less than 5 locations.

B (good): absorption peaks of the adhesive were confirmed at 5 or more and less than 8 locations.

C (acceptable): absorption peaks of the adhesive were confirmed at 8 or more and less than 10 locations.

D (unacceptable): absorption peaks of the adhesive were confirmed at 10 or more locations.

[Table 7-1]

| Table 7-1 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-1 | L1 | A1 | A | - | B | - | B | - |

(continued)

| Table 7-1 | Deinking test | | Evaluation | | | | | |
| | packaging material | treatment solution | defoaming property | base material separability | releasability | | re-adhesion prevention property | |
| | | | | | printing layer | adhesive layer | printing layer | adhesive layer |
| Example 1-2 | L1 | A2 | B | - | A | - | A | - |
| Example 1-3 | L1 | A3 | A | - | A | - | A | - |
| Example 1-4 | L1 | A4 | A | - | A | - | A | - |
| Example 1-5 | L1 | A5 | B | - | B | - | A | - |
| Example 1-6 | L1 | A6 | C | - | A | - | A | - |
| Example 1-7 | L1 | A7 | B | - | A | - | B | - |
| Example 1-8 | L1 | A8 | B | - | B | - | B | - |
| Example 1-9 | L1 | A9 | A | - | B | - | C | - |
| Example 1-10 | L1 | A10 | A | - | B | - | C | - |
| Example 1-11 | L1 | A11 | A | - | A | - | A | - |
| Example 1-12 | L1 | A12 | A | - | A | - | A | - |
| Example 1-13 | L1 | A13 | B | - | A | - | A | - |
| Example 1-14 | L1 | A14 | B | - | A | - | A | - |
| Example 1-15 | L1 | A15 | C | - | B | - | C | - |
| Example 1-16 | L1 | A16 | A | - | C | - | A | - |
| Example 1-17 | L1 | A17 | A | - | C | - | B | - |
| Example 1-18 | L1 | A18 | B | - | A | - | B | - |
| Example 1-19 | L1 | A19 | C | - | A | - | B | - |
| Example 1-20 | L1 | A20 | A | - | C | - | A | - |
| Example 1-21 | L1 | A21 | A | - | A | - | A | - |

(continued)

| Table 7-1 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-22 | L1 | A22 | A | - | B | - | A | - |
| Example 1-23 | L1 | A23 | A | - | A | - | A | - |
| Example 1-24 | L5 | A24 | A | - | A | - | C | - |
| Example 1-25 | L2 | A3 | A | - | A | - | A | - |
| Example 1-26 | L3 | A3 | A | - | A | - | A | - |
| Example 1-27 | L4 | A3 | A | - | A | - | A | - |
| Example 1-28 | L6 | A3 | A | - | B | - | A | - |
| Example 1-29 | L7 | A3 | A | - | A | - | A | - |
| Example 1-30 | L8 | A3 | A | - | A | - | A | - |
| Example 1-31 | L8 | A7 | B | - | A | - | B | - |
| Example 1-32 | L8 | A9 | A | - | B | - | C | - |
| Example 1-33 | L8 | A14 | B | - | A | - | A | - |
| Example 1-34 | L9 | A3 | A | - | A | - | A | - |
| Example 1-35 | L10 | A3 | A | - | A | - | A | - |
| Example 1-36 | L11 | A3 | A | - | A | - | A | - |
| Example 1-37 | L12 | A3 | A | A | A | A | A | A |
| Example 1-38 | L13 | A3 | A | A | A | A | A | A |

[Table 7-2]

| Table 7-2 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-39 | L14 | A1 | A | B | B | B | B | B |
| Example 1-40 | L14 | A2 | B | A | A | A | A | A |
| Example 1-41 | L14 | A3 | A | A | A | A | A | A |
| Example 1-42 | L14 | A4 | A | A | A | A | A | A |
| Example 1-43 | L14 | A5 | B | B | B | B | A | A |
| Example 1-44 | L14 | A6 | C | A | A | A | A | A |
| Example 1-45 | L14 | A7 | B | A | A | A | B | B |
| Example 1-46 | L14 | A8 | B | B | B | B | B | B |
| Example 1-47 | L14 | A9 | A | B | B | B | C | C |
| Example 1-48 | L14 | A10 | A | B | B | B | C | C |
| Example 1-49 | L14 | A11 | A | A | A | A | A | A |
| Example 1-50 | L14 | A12 | A | A | A | A | A | A |
| Example 1-51 | L14 | A13 | B | A | A | A | A | A |
| Example 1-52 | L14 | A14 | B | A | A | A | A | A |
| Example 1-53 | L14 | A15 | C | B | B | B | C | C |
| Example 1-54 | L14 | A16 | A | C | C | C | A | A |
| Example 1-55 | L14 | A17 | A | C | C | C | B | B |
| Example 1-56 | L14 | A18 | B | A | A | A | B | B |
| Example 1-57 | L14 | A19 | C | A | A | A | B | B |
| Example 1-58 | L14 | A20 | A | C | C | C | A | A |

(continued)

| Table 7-2 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-59 | L14 | A21 | A | A | A | A | A | A |
| Example 1-60 | L14 | A22 | A | B | B | B | A | A |
| Example 1-61 | L14 | A23 | A | A | A | A | A | A |
| Example 1-62 | L18 | A24 | A | A | A | A | C | C |
| Example 1-63 | L15 | A3 | A | A | A | A | A | A |
| Example 1-64 | L16 | A3 | A | A | A | A | A | A |
| Example 1-65 | L17 | A3 | A | A | A | A | A | A |
| Example 1-66 | L19 | A3 | A | A | B | B | A | A |
| Example 1-67 | L20 | A3 | A | A | B | B | A | A |
| Example 1-68 | L21 | A3 | A | A | C | C | A | A |
| Example 1-69 | L22 | A3 | A | A | A | A | A | A |
| Example 1-70 | L23 | A3 | A | A | B | B | A | A |
| Example 1-71 | L23 | A7 | B | A | C | C | B | B |
| Example 1-72 | L23 | A9 | A | B | C | C | C | C |
| Example 1-73 | L23 | A14 | B | A | B | B | A | A |
| Example 1-74 | L24 | A3 | A | A | B | B | A | A |
| Example 1-75 | L25 | A3 | A | A | B | B | A | A |
| Example 1-76 | L26 | A3 | A | A | B | B | A | A |
| Example 1-77 | L27 | A3 | A | A | C | C | A | A |
| Example 1-78 | L28 | A3 | A | A | B | B | A | A |

[Table 7-3]

| Table 7-3 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-79 | L29 | A3 | A | A | - | A | - | A |
| Example 1-80 | L29 | A7 | B | A | - | A | - | B |
| Example 1-81 | L29 | A9 | A | B | - | B | - | C |
| Example 1-82 | L29 | A14 | B | A | - | A | - | A |
| Example 1-83 | L30 | A3 | A | B | - | B | - | A |
| Example 1-84 | L31 | A3 | A | C | - | C | - | A |
| Example 1-85 | L32 | A3 | A | A | - | A | - | A |
| Example 1-86 | L33 | A3 | A | A | - | A | - | A |
| Example 1-87 | L34 | A3 | A | A | - | A | - | A |

[Table 7-4]

| Table 7-4 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Comparative Example 1 | L1 | AA1 | A | - | C | - | D | - |
| Comparative Example 2 | L1 | AA2 | A | - | C | - | D | - |
| Comparative Example 3 | L1 | AA3 | D | - | B | - | B | - |
| Comparative Example 4 | L8 | AA1 | A | - | C | - | D | - |
| Comparative Example 5 | L8 | AA2 | A | - | C | - | D | - |
| Comparative Example 6 | L8 | AA3 | D | - | B | - | B | - |
| Comparative Example 7 | LL1 | AA4 | C | - | B | - | D | - |

(continued)

| Table 7-4 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Comparative Example 8 | LL1 | A1 | A | - | B | - | D | - |
| Comparative Example 9 | L14 | AA1 | A | C | C | C | D | D |
| Comparative Example 10 | L14 | AA2 | A | C | C | C | D | D |
| Comparative Example 11 | L14 | AA3 | D | B | B | B | B | B |
| Comparative Example 12 | L29 | AA1 | A | C | - | C | - | D |
| Comparative Example 13 | L29 | AA2 | A | C | - | C | - | D |
| Comparative Example 14 | L29 | AA3 | D | B | - | B | - | B |

[Table 7-5]

| Table 7-5 | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Example 1-88 | L1 | A25 | A | - | C | - | B | - |
| Example 1-89 | L1 | A26 | A | - | C | - | C | - |
| Example 1-92 | L14 | A25 | A | C | C | C | B | B |
| Example 1-93 | L14 | A26 | A | C | C | C | C | C |

[Table 7-6]

| | Deinking test | | Evaluation | | | | | |
|---|---|---|---|---|---|---|---|---|
| | packaging material | treatment solution | defoaming property | base material separability | releasability | | re-adhesion prevention property | |
| | | | | | printing layer | adhesive layer | printing layer | adhesive layer |
| Comparative Example 15 | L1 | AA5 | D | - | B | - | D | - |

(continued)

| | Deinking test | | Evaluation | | | | | |
| | packaging material | treatment solution | defoaming property | base material separability | releasability | | re-adhesion prevention property | |
| | | | | | printing layer | adhesive layer | printing layer | adhesive layer |
| Comparative Example 16 | L14 | AA5 | D | C | C | C | D | D |
| Comparative Example 17 | LL2 | A3 | D | - | D | - | - | - |
| Comparative Example 18 | LL3 | A3 | D | D | - | - | - | - |

<Production of recycled film and evaluation of transmittance>

[Example 2-1]

A sample obtained by cutting the packaging material L14 into a size of 1 cm×1 cm was immersed in the treatment solution A1 and stirred at 70°C for 2 hours. After the released OPP base material and CPP base material were recovered, washed with water, and dried, a mixture containing the OPP base material and the CPP base material was extruded at 200°C using a single screw extruder, and subjected to a pelletizing step, and recycled resin pellets were obtained. The recycled resin was extruded at 200°C using a T-die film molding machine to produce a recycled film with a thickness of 40 $\mu$m.

Regarding coloring of the recycled film, the total light transmittance was measured using a haze meter (SH7000 commercially available from JEOL Ltd.), and evaluated based on the following criteria.

A (excellent): the total light transmittance was 70% or more
B (good): the total light transmittance was 50% or more and less than 70%
C (acceptable): the total light transmittance was 30% or more and less than 50%
D (unacceptable): the total light transmittance was less than 30%

[Examples 2-2 to 2-24 and Comparative Examples 2-1 to 2-2]

Recycled films were produced and evaluated in the same manner as in Example 2-1 except that packaging materials and treatment solutions were changes to those listed in Table 8. The results are shown in Table 8.

[Table 8]

Table 8

| | Deinking test | | Coloring of recycled film |
| | packaging material | treatment solution | |
| Example 2-1 | L14 | A1 | B |
| Example 2-2 | L14 | A2 | A |
| Example 2-3 | L14 | A3 | A |
| Example 2-4 | L14 | A4 | A |
| Example 2-5 | L14 | A5 | A |
| Example 2-6 | L14 | A6 | A |
| Example 2-7 | L14 | A7 | B |

(continued)

| | Deinking test | | Coloring of recycled film |
|---|---|---|---|
| | packaging material | treatment solution | |
| Example 2-8 | L14 | A8 | B |
| Example 2-9 | L14 | A9 | C |
| Example 2-10 | L14 | A10 | C |
| Example 2-11 | L14 | A11 | A |
| Example 2-12 | L14 | A12 | A |
| Example 2-13 | L14 | A13 | A |
| Example 2-14 | L14 | A14 | A |
| Example 2-15 | L14 | A15 | C |
| Example 2-16 | L14 | A16 | A |
| Example 2-17 | L14 | A17 | B |
| Example 2-18 | L14 | A18 | B |
| Example 2-19 | L14 | A19 | B |
| Example 2-20 | L14 | A20 | A |
| Example 2-21 | L14 | A21 | A |
| Example 2-22 | L14 | A22 | A |
| Example 2-23 | L14 | A23 | A |
| Example 2-24 | L18 | A24 | C |
| Comparative Example 2-1 | L14 | AA1 | D |
| Comparative Example 2-2 | L14 | AA2 | D |

The above evaluation results showed that, in the method according to the embodiment of the present invention, even if the amount of the packaging material treated was large, the printing layer and the adhesive layer were easily released from the packaging material, a high-quality recycling base material with little re-adhesion of the printing layer and the adhesive layer was obtained, and a high-quality molding material with little coloring was additionally obtained.

## Claims

1. A method for separation and recovery of a laminate, comprising

   a step for immersing a laminate having at least a polyolefin base material layer and a release layer in contact with the polyolefin base material layer in a release solution containing a surfactant having an HLB value of 7 or more and a defoamer having an HLB value of 1 to 3, releasing the release layer, and recovering the polyolefin base material,
   wherein the release layer is a layer containing a water-soluble resin or a compound having an acidic group.

2. The method for separation and recovery of a laminate according to claim 1,
   wherein the release layer includes at least one layer selected from the group consisting of a primer layer, a printing layer and an adhesive layer.

3. The method for separation and recovery of a laminate according to claim 1 or 2,
   wherein the defoamer is at least one selected from the group consisting of an emulsion type silicone compound, a self-emulsion type silicone compound, and a non-silicone compound.

4. The method for separation and recovery of a laminate according to any one of claims 1 to 3, wherein the content of the defoamer based on the mass of the release solution is 0.0001 to 5 mass%.

5. The method for separation and recovery of a laminate according to any one of claims 1 to 4, wherein the release solution is a basic aqueous solution containing a basic compound.

6. The method for separation and recovery of a laminate according to any one of claims 1 to 5, wherein the surfactant includes at least one surfactant selected from the group consisting of an anionic surfactant and a nonionic surfactant.

7. The method for separation and recovery of a laminate according to claim 6, wherein the anionic surfactant includes at least one surfactant selected from the group consisting of a sulfonic acid-based anionic surfactant, a sulfate ester anionic, a carboxylic acid-based anionic surfactant, and a phosphate ester-based anionic surfactant.

8. The method for separation and recovery of a laminate according to claim 6, wherein the nonionic surfactant includes at least one surfactant selected from the group consisting of an alcohol-based nonionic surfactant, a fatty acid-based nonionic surfactant, and a fatty acid-based nonionic surfactant.

9. The method for separation and recovery of a laminate according to any one of claims 1 to 8, wherein the surfactant is an alkylene oxide adduct.

10. The method for separation and recovery of a laminate according to any one of claims 1 to 9, wherein the HLB value of the surfactant is 7 to 20.

11. The method for separation and recovery of a laminate according to any one of claims 1 to 10, wherein the content of the surfactant based on the mass of the release solution is 0.001 to 10 mass%.

12. A method for producing a molding material, comprising melt-kneading the polyolefin base material recovered by the method for separation and recovery of a laminate according to any one of claims 1 to 11.

13. A method for producing a molded article, comprising heat-molding the molding material obtained by the production method according to claim 12.

14. A method for producing a polyolefin base material, comprising:

preparing a laminate having at least a polyolefin base material layer and a release layer in contact with the polyolefin base material layer, and in which the release layer is a layer containing a water-soluble resin or a compound having an acidic group; and
recovering the polyolefin base material by the method for separation and recovery of a laminate according to any one of claims 1 to 11.

<table>
<tr><td colspan="2" align="center">**INTERNATIONAL SEARCH REPORT**</td><td>International application No.<br>**PCT/JP2022/042743**</td></tr>
</table>

**A.    CLASSIFICATION OF SUBJECT MATTER**

*C08F 20/04*(2006.01)i; *C08J 11/22*(2006.01)i; *B29B 17/02*(2006.01)i; *B32B 7/06*(2019.01)i; *B32B 38/18*(2006.01)i; *C08J 7/02*(2006.01)i

FI:   C08J11/22 ZAB; B32B7/06; C08F20/04; B32B38/18 C; C08J7/02 A CES; B29B17/02

According to International Patent Classification (IPC) or to both national classification and IPC

**B.    FIELDS SEARCHED**

Minimum documentation searched (classification system followed by classification symbols)

C08F20/04; C08J11/22; B29B17/02; B32B7/06; B32B38/18; C08J7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2010-012636 A (TOKUYAMA CORP.) 21 January 2010 (2010-01-21)<br>entire text | 1-14 |
| A | US 5143308 A (PLASTIC RECYCLING ALLIANCE, LP) 01 September 1992 (1992-09-01)<br>entire text | 1-14 |
| A | JP 2013-212624 A (SEIKO EPSON CORP.) 17 October 2013 (2013-10-17)<br>entire text | 1-14 |
| A | WO 2020/059516 A1 (DIC CORP.) 26 March 2020 (2020-03-26)<br>entire text | 1-14 |
| A | WO 2021/230033 A1 (DIC CORP.) 18 November 2021 (2021-11-18)<br>entire text | 1-14 |
| A | WO 2021/090803 A1 (DOW TORAY CO., LTD.) 14 May 2021 (2021-05-14)<br>entire text | 1-14 |

☑ Further documents are listed in the continuation of Box C.   ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 December 2022** | **10 January 2023** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

International application No.

**PCT/JP2022/042743**

**C.    DOCUMENTS CONSIDERED TO BE RELEVANT**

| Category* | Citation of document, with indication, where appropriate, of the relevant passages | Relevant to claim No. |
|---|---|---|
| A | US 2018/0319141 A1 (UPM RAFLATAC OY) 08 November 2018 (2018-11-08)<br>entire text | 1-14 |
| A | US 6114401 A (DOONAN, Billie Odell) 05 September 2000 (2000-09-05)<br>entire text | 1-14 |
| A | WO 2005/085381 A1 (SPEAR GROUP HOLDINGS LIMITED) 15 September 2005<br>(2005-09-15)<br>entire text | 1-14 |
| A | US 4830188 A (RUTGERS, THE STATE UNIVERSITY) 16 May 1989 (1989-05-16)<br>entire text | 1-14 |

Form PCT/ISA/210 (second sheet) (January 2015)

**INTERNATIONAL SEARCH REPORT**
Information on patent family members

International application No.

**PCT/JP2022/042743**

| Patent document cited in search report | | | Publication date (day/month/year) | Patent family member(s) | | | Publication date (day/month/year) |
|---|---|---|---|---|---|---|---|
| JP | 2010-012636 | A | 21 January 2010 | (Family: none) | | | |
| US | 5143308 | A | 01 September 1992 | (Family: none) | | | |
| JP | 2013-212624 | A | 17 October 2013 | US | 2013/0257975 | A1 | |
| WO | 2020/059516 | A1 | 26 March 2020 | US | 2021/0187790 | A1 | |
| | | | | EP | 3854841 | A1 | |
| WO | 2021/230033 | A1 | 18 November 2021 | JP | 2022-68217 | A | |
| WO | 2021/090803 | A1 | 14 May 2021 | CN | 114728215 | A | |
| | | | | KR | 10-2022-0092953 | A | |
| US | 2018/0319141 | A1 | 08 November 2018 | WO | 2017/077184 | A1 | |
| | | | | EP | 3370954 | A1 | |
| | | | | CN | 108430761 | A | |
| US | 6114401 | A | 05 September 2000 | (Family: none) | | | |
| WO | 2005/085381 | A1 | 15 September 2005 | GB | 2411877 | A | |
| | | | | EP | 1743006 | A1 | |
| US | 4830188 | A | 16 May 1989 | (Family: none) | | | |

Form PCT/ISA/210 (patent family annex) (January 2015)

**REFERENCES CITED IN THE DESCRIPTION**

**Patent documents cited in the description**

- JP 2020090627 A
- JP 2020084130 A
- JP 2015520684 W
- JP 2010012636 A
- US 5143308 A
- WO 2021230033 A
- JP 2021189093 A
- JP 2022069564 A